# EUROPEAN PATENT APPLICATION

(11) **EP 4 776 727 A1**
(43) Date of publication of application: **15.07.2026**
(21) Application number: 24870331.6
(22) Date of filing: 30.08.2024
(51) Int. Cl.: H04W 72/23

(54) **DATA TRANSMISSION METHOD AND APPARATUS**

(30) Priority: 28.09.2023 CN 202311294495; 10.05.2024 CN 202410594550
(71) Applicant: HUAWEI TECHNOLOGIES CO., LTD., Shenzhen 518129 (CN)
(72) Inventor: FANG, Songlei, Shenzhen, Guangdong 518129 (CN); LI, Chenwan, Shenzhen, Guangdong 518129 (CN)
(74) Representative: Epping - Hermann - Fischer
(86) International application number: PCT/CN2024/115953
(87) International publication number: WO 2025/066785

(57) **Abstract**

A data transmission method and an apparatus are provided, and are used in a field like an ambient internet of things. The method includes: sending a paging message to a terminal device, where the paging message is used to page the terminal device; and sending scheduling information to the terminal device, where the scheduling information is used to schedule a resource for transmission of first data, the resource is determined based on a data size indicated by first information, and the first information is from a core network device. According to the foregoing method, a network device may determine a data size of the first data based on the first information, to schedule the resource based on the data size without waiting for a buffer status report from the terminal device. The network device performs resource scheduling for the terminal device when the terminal device sends no buffer status report, so that power consumption of the terminal device can be reduced, data transmission latency can be reduced, and resource utilization can be improved. This is particularly applicable to a scenario like the ambient internet of things.

## Description

### CROSS-REFERENCE TO RELATED APPLICATIONS

This application claims priorities to Chinese Patent Application No. 202311294495.9, filed with the China National Intellectual Property Administration on September 28, 2023, and entitled "DATA TRANSMISSION METHOD AND APPARATUS", and to Chinese Patent Application No. 202410594550.4, filed with the China National Intellectual Property Administration on May 10, 2024, and entitled "DATA TRANSMISSION METHOD AND APPARATUS", both of which are incorporated herein by reference in their entireties.

### TECHNICAL FIELD

This application relates to the field of communication technologies, and in particular, to a data transmission method and an apparatus.

### BACKGROUND

In a wireless communication system, if a terminal device needs to send uplink data, the terminal device may first send a buffer status report (buffer status report, BSR) to a base station, where the BSR may indicate a size of buffered data to be sent by the terminal device, so that the base station can allocate an uplink resource to the terminal device based on the size of the buffered data indicated by the BSR.

When an internet of things technology is introduced to the wireless communication system, a structure of a device like a tag (tag) in an internet of things is simple, and the tag may not be able to report a BSR, or latency in a procedure for reporting the BSR by the tag is large. In this case, how to allocate a resource to the device like the tag when the base station does not receive the BSR is an urgent problem to be resolved.

### SUMMARY

This application provides a data transmission method and an apparatus, to provide a resource allocation solution.

According to a first aspect, this application provides a data transmission method. The method is applicable to a scenario like an ambient internet of things (ambient IoT, AIoT). The method is performed by a network device or a module or a chip in the network device. Herein, an example in which the method is performed by the network device is used for description. The method includes: sending first signaling to a terminal device, where the first signaling indicates the terminal device to report first data, and the first signaling is used by the terminal device to determine not to send a buffer status report related to the first data; and sending scheduling information to the terminal device, where the scheduling information is used to schedule a resource for transmission of the first data, and a size of the resource is determined based on a preset data size of the first data.

In the foregoing method, whether the terminal device sends the buffer status report may be determined based on the first signaling. Therefore, the scheduling information may be sent to the terminal device when the buffer status report from the terminal device is not received, to propose a resource scheduling procedure without the buffer status report. Because the terminal device does not need to send the buffer status report, power consumption of the terminal device can be reduced, data transmission latency can be reduced, and resource utilization can be improved. This is particularly applicable to the scenario like the ambient internet of things that has a high requirement on power consumption.

In a possible implementation, the scheduling information is sent when the buffer status report is not received.

In a possible implementation, the method further includes: receiving the first signaling and first indication information from a core network device, where the first indication information indicates a data size of the first data.

In the method, because the core network device indicates the data size of the first data by using the first indication information, the data size of the first data can be determined when the first signaling is received. Therefore, the resource is scheduled without waiting for the buffer status report from the terminal device, so that the scheduling information can be sent when the buffer status report from the terminal device is not received.

In a possible implementation, the first signaling is inventory signaling, and the first data is service data of an inventory service.

In a possible implementation, the first signaling is read signaling, and the first data is data stored by the terminal device.

In a possible implementation, the first signaling is located in a paging message, a random access response message, or a first message, where the first message is a message after the terminal device completes random access.

In a possible implementation, the first signaling further includes second indication information, and the second indication information indicates not to send the buffer status report.

In the method, the second indication information directly indicates the terminal device not to send the buffer status report, to reduce a procedure for determining, by the terminal device, whether to send the buffer status report, so that the power consumption of the terminal device can be reduced, and data transmission efficiency can be improved.

In a possible implementation, the terminal device is a tag in the ambient internet of things.

In a possible implementation, the method further includes:
receiving a second message from the terminal device by using the resource, where the second message includes the first data, where the data size indicated by the first information is equal to the data size of the first data, or the data size indicated by the first information is equal to a data size of the second message.

In a possible implementation, the method further includes:
receiving a second message from the terminal device by using the resource, where the second message includes the first data, and the second message further includes at least one of an access stratum message header and access stratum signaling, where the data size indicated by the first information is equal to a sum of the data size of the first data and at least one of a data size of the access stratum message header and a data size of the access stratum signaling.

According to a second aspect, this application provides a data transmission method. The method is applicable to a scenario like an ambient internet of things. The method is performed by a terminal device or a module or a chip in the terminal device. Herein, an example in which the method is performed by the terminal device is used for description. The method includes: receiving first signaling from a network device, where the first signaling indicates the terminal device to report first data; and when determining, based on the first signaling, not to send a buffer status report related to the first data, receiving scheduling information from the network device, where the scheduling information is used to schedule a resource, the resource is used for transmission of the first data, and a size of the resource is determined based on a preset data size of the first data.

In a possible implementation, the method further includes: triggering the buffer status report, where a logical channel priority of the triggered buffer status report is the lowest, or a logical channel of the triggered buffer status report is a closed logical channel.

In a possible implementation, the determining, based on the first signaling, not to send the buffer status report related to the first data includes: when a signaling type of the first signaling is a preset type, determining not to send the buffer status report.

In a possible implementation, the first signaling further includes second indication information, where the second indication information indicates not to send the buffer status report; and the determining, based on the first signaling, not to send the buffer status report related to the first data includes: determining, based on the second indication information, not to send the buffer status report.

In a possible implementation, the first signaling is inventory signaling, and the first data is service data of an inventory service.

In a possible implementation, the first signaling is read signaling, and the first data is data stored by the terminal device.

In a possible implementation, the first signaling is located in a paging message, a random access response message, or a first message, where the first message is a message after the terminal device completes random access.

In a possible implementation, the method is applied to the terminal device, and the terminal device is a tag in the ambient internet of things.

In a possible implementation, the method further includes:
sending a second message to the network device by using the resource, where the second message includes the first data, where a data size indicated by first information is equal to a data size of the first data, or a data size indicated by first information is equal to a data size of the second message.

In a possible implementation, the method further includes:
sending a second message to the network device by using the resource, where the second message includes the first data, and the second message further includes at least one of an access stratum message header and access stratum signaling, where a data size indicated by first information is equal to a sum of a data size of the first data and at least one of a data size of the access stratum message header and a data size of the access stratum signaling.

According to a third aspect, this application provides a data transmission method. The method is applicable to a scenario like an ambient internet of things. The method is performed by a core network device or a module or a chip in the core network device. Herein, an example in which the method is performed by the core network device is used for description. The method includes: determining first signaling, where the first signaling indicates a terminal device to report first data; and sending the first signaling and first indication information to a network device, where the first indication information indicates a data size of the first data.

According to a fourth aspect, this application provides a data transmission method. The method is applicable to a scenario like an ambient internet of things. The method is performed by a network device or a module or a chip in the network device. Herein, an example in which the method is performed by the network device is used for description. The method includes: sending a paging message to a terminal device, where the paging message is used to page the terminal device; and sending scheduling information to the terminal device, where the scheduling information is used to schedule a resource for transmission of first data, the resource is determined based on the data size indicated by the first information, and the first information is from a core network device.

According to the foregoing method, the network device may determine a data size of the first data based on the first information, to schedule the resource based on the data size without waiting for a buffer status report from the terminal device. The network device performs resource scheduling for the terminal device when the terminal device sends no buffer status report, so that power consumption of the terminal device can be reduced, data transmission latency can be reduced, and resource utilization can be improved.

In a possible implementation, the scheduling information is sent when a first buffer status report related to the first data is not received.

In a possible implementation, the first information includes the data size of the first data.

In a possible implementation, the first information is second data sent to the terminal device, and there is a correspondence between the second data and the data size of the first data.

In a possible implementation, the first information indicates a service corresponding to the first data, and there is a correspondence between the service corresponding to the first data and the data size of the first data.

In a possible implementation, the method further includes: sending first signaling to the terminal device, where the first signaling indicates the terminal device to report the first data, where the first signaling is used to trigger an inventory procedure, and the first data is service data of an inventory service; or the first signaling is used to trigger a read procedure, and the first data is data stored by the terminal device.

In a possible implementation, the first signaling is located in the paging message, a random access response message, or a first message.

The first message is a message after the terminal device completes random access.

In a possible implementation, the method further includes: sending second information to the terminal device, where the second information indicates not to send or send the first buffer status report related to the first data, and the second information is located in the paging message or the random access response message.

In the method, the second information directly indicates not to send the buffer status report, to reduce complexity of determining, by the terminal device, whether to send the buffer status report, so that the power consumption of the terminal device can be reduced. This is particularly applicable to a device like a tag in the ambient internet of things.

In a possible implementation, the terminal device is a tag in the ambient internet of things.

In a possible implementation, the method further includes: sending third information to the terminal device, where the third information indicates the terminal device to report a second buffer status report before data transmission, and the third information is sent after the terminal device completes the random access.

According to a fifth aspect, this application provides a data transmission method. The method is applicable to a scenario like an ambient internet of things. The method is performed by a terminal device or a module or a chip in the terminal device. Herein, an example in which the method is performed by the terminal device is used for description. The method includes: receiving a paging message from a network device, where the paging message is used to page the terminal device; and receiving scheduling information from the network device, where the scheduling information is used to schedule a resource for transmission of first data, the resource is determined based on a data size indicated by first information, and the first information is from a core network device.

In a possible implementation, the first information includes a data size of the first data.

In a possible implementation, the first information is second data sent to the terminal device, and there is a correspondence between the second data and a data size of the first data.

In a possible implementation, the method further includes: receiving first signaling from the network device, where the first signaling indicates to report the first data, where the first signaling is used to trigger an inventory procedure, and the first data is service data of an inventory service; or the first signaling is used to trigger a read procedure, and the first data is data stored by the terminal device.

In a possible implementation, the first signaling is located in the paging message, a random access response message, or a first message, where the first message is a message after the terminal device completes random access.

In a possible implementation, the method is applied to a tag in the ambient internet of things.

In a possible implementation, the first data is sent to the network device by using the resource. According to a sixth aspect, this application provides a data transmission method. The method is applicable to a scenario like an ambient internet of things. The method is performed by a core network device or a module or a chip in the core network device. Herein, an example in which the method is performed by the core network device is used for description. The method includes: determining first information, where the first information indicates a data size of first data; and sending the first information to a network device.

According to a seventh aspect, this application provides a data transmission method. The method is applicable to a scenario like an ambient internet of things. The method is performed by a second apparatus or a module or a chip in the second apparatus. The second apparatus is a device like a network device, a reader, a terminal device, or a tag. Herein, an example in which the method is performed by the second apparatus is used for description. The method includes: sending configuration information to a first apparatus, where the configuration information indicates a first resource or a first transport block size, the first resource is determined based on a first data size indicated by first information, the first transport block size indicates a size of data to be sent by the first apparatus, and the first information is from a core network device.

In a possible implementation, the method further includes: sending a paging message to the first apparatus, where the paging message is used to page the first apparatus.

In a possible implementation, the configuration information is sent when a first buffer status report from the first apparatus is not received.

In a possible implementation, the first information includes the first data size.

In a possible implementation, the first information is second data sent to the first apparatus, and there is a correspondence between the second data and the first data size.

In a possible implementation, the first information indicates a first service, and there is a correspondence between the first service and the first data size.

In a possible implementation, the method further includes:
sending first signaling to the first apparatus, where the first signaling indicates the first apparatus to report first data.

The first signaling is used to trigger an inventory procedure, and the first data is service data of an inventory service.

Alternatively, the first signaling is used to trigger a read procedure, and the first data is data stored by the first apparatus.

In a possible implementation, the first signaling is located in the paging message, a random access response message, or a first message.

The first message is a message after the first apparatus completes random access.

In a possible implementation, the method further includes: receiving a second message from the first apparatus by using the first resource, where the second message includes the first data, and the first data size is equal to a data size of the first data, or the first data size is equal to a data size of the second message.

In a possible implementation, the method further includes: sending a second message to the second apparatus by using the first resource, where the second message includes the first data, and the second message further includes at least one of an access stratum message header, access stratum signaling, and padding, where the first data size is less than or equal to a sum of a data size of the first data and at least one of a data size of the access stratum message header, a data size of the access stratum signaling, and a data size of the padding.

In a possible implementation, the method further includes: sending second information to the first apparatus, where the second information indicates not to send or send the first buffer status report, and the second information is located in the paging message or the random access response message.

According to an eighth aspect, this application provides a data transmission method. The method is applicable to a scenario like an ambient internet of things. The method is performed by a first apparatus or a module or a chip in the first apparatus. The first apparatus is a device like a terminal device or a tag. Herein, an example in which the method is performed by the first apparatus is used for description. The method includes: receiving configuration information from a second apparatus, where the configuration information indicates a first resource or a first transport block size, the first resource is determined based on a first data size indicated by first information, the first transport block size indicates a size of data to be sent by the first apparatus, and the first information is from a core network device.

In a possible implementation, a paging message from the second apparatus is received, where the paging message is used to page the first apparatus.

In a possible implementation, the first information includes the first data size.

In a possible implementation, the first information is second data sent to the first apparatus, and there is a correspondence between the second data and the first data size.

In a possible implementation, the method further includes: receiving first signaling from the second apparatus, where the first signaling indicates to report first data, where the first signaling is used to trigger an inventory procedure, and the first data is service data of an inventory service; or the first signaling is used to trigger a read procedure, and the first data is data stored by the first apparatus.

In a possible implementation, the first signaling is located in the paging message, a random access response message, or a first message, where the first message is a message after the first apparatus completes random access.

In a possible implementation, the method further includes: sending a second message to the second apparatus by using the first resource, where the second message includes the first data, and the first data size is equal to a data size of the first data, or the first data size is equal to a data size of the second message.

In a possible implementation, the method further includes: receiving a second message from the first apparatus by using the first resource, where the second message includes the first data, and the second message further includes at least one of an access stratum message header, access stratum signaling, and padding, where the first data size is less than or equal to a sum of a data size of the first data and at least one of a data size of the access stratum message header, a data size of the access stratum signaling, and a data size of the padding.

According to a ninth aspect, this application provides a data transmission method. The method is applicable to a scenario like an ambient internet of things. The method is performed by a core network device or a module or a chip in the core network device. Herein, an example in which the method is performed by the core network device is used for description. The method includes:
determining first information, where the first information indicates a first data size; and
sending the first information to a second apparatus.

According to a tenth aspect, this application further provides a communication apparatus. The communication apparatus can implement any method provided in any one of the first aspect to the ninth aspect. The communication apparatus may be implemented by hardware, or may be implemented by hardware executing corresponding software. The hardware or the software includes one or more units or modules corresponding to the foregoing function.

In a possible implementation, the communication apparatus includes a processor. The processor is configured to support the communication apparatus in performing a corresponding function of the network device, the terminal device, or the core network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like the terminal device.

In a possible implementation, the communication apparatus includes corresponding functional modules respectively configured to implement the steps in the foregoing method. The function may be implemented by hardware, or may be implemented by hardware executing corresponding software. The hardware or the software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in any one of the first aspect to the ninth aspect. Details are not described herein again.

According to an eleventh aspect, a communication apparatus is provided, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method in any possible implementation of any one of the first aspect to the ninth aspect by using a logic circuit or by executing a computer program or instructions. Optionally, the communication apparatus further includes a memory, and the memory is configured to store the computer program or the instructions.

According to a twelfth aspect, a computer-readable storage medium is provided. The computer-readable storage medium stores a computer program or instructions. When the computer program or the instructions are executed by a processor, the method in any possible implementation of any one of the first aspect to the ninth aspect is implemented.

According to a thirteenth aspect, a computer program product storing instructions is provided. When a computer reads and executes the computer program product, the method in any possible implementation of any one of the first aspect to the ninth aspect is implemented.

According to a fourteenth aspect, a circuit is provided. The circuit is configured to perform the method in any possible implementation of any one of the first aspect to the ninth aspect, and the circuit may include a chip circuit. Optionally, the circuit may be further coupled to a memory.

According to a fifteenth aspect, a chip is provided. The chip includes a processor. When executing a computer program or instructions, the processor is configured to implement the method in any possible implementation of any one of the first aspect to the ninth aspect. Optionally, the chip may further include a memory. The chip may include a chip, or may include a chip and another discrete device.

According to a sixteenth aspect, a communication apparatus is provided, and includes a processor.

The processor implements the method in any possible implementation of any one of the first aspect to the ninth aspect by using a logic circuit or by executing a computer program or instructions. According to a seventeenth aspect, a communication apparatus is provided, and includes a unit or a module configured to perform the method in any possible implementation of any one of the first aspect to the ninth aspect.

According to an eighteenth aspect, an embodiment of this application further provides a communication system. The communication system includes: a network device configured to implement the method in the first aspect and any possible implementation of the first aspect; a terminal device configured to implement the method in the second aspect and any possible implementation of the second aspect; and a core network device configured to implement the method in the third aspect.

According to a nineteenth aspect, an embodiment of this application further provides a communication system. The communication system includes: a network device configured to implement the method in the fourth aspect and any possible implementation of the fourth aspect; a terminal device configured to implement the method in the fifth aspect and any possible implementation of the fifth aspect; and a core network device configured to implement the method in the sixth aspect.

According to a twentieth aspect, an embodiment of this application further provides a communication system. The communication system includes: a second apparatus configured to implement the method in the seventh aspect and any possible implementation of the seventh aspect; a first apparatus configured to implement the method in the eighth aspect and any possible implementation of the eighth aspect; and a core network device configured to implement the method in the ninth aspect.

### BRIEF DESCRIPTION OF DRAWINGS

FIG. 1 is a diagram of a system architecture according to an embodiment of this application;
FIG. 2 is a diagram of a system architecture according to an embodiment of this application;
FIG. 3 is a diagram of a system architecture according to an embodiment of this application;
FIG. 4 is a diagram of a system architecture according to an embodiment of this application;
FIG. 5 is a schematic flowchart of a data transmission method according to an embodiment of this application;
FIG. 6 is a schematic flowchart of a data transmission method according to an embodiment of this application;
FIG. 7 is a schematic flowchart of a data transmission method according to an embodiment of this application;
FIG. 8 is a schematic flowchart of a data transmission method according to an embodiment of this application;
FIG. 9 is a schematic flowchart of a data transmission method according to an embodiment of this application;
FIG. 10 is a schematic flowchart of a data transmission method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

The following describes technical solutions in embodiments of this application with reference to the accompanying drawings in embodiments of this application. It is clear that the described embodiments are merely some but not all of embodiments of this application. In this application, terms "first" and "second" and corresponding term numbers are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

A method provided in embodiments of this application may be applied to various mobile communication systems, for example, an internet of things (internet of things, IoT), a narrow band internet of things (narrow band internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. The communication system may further include a machine to machine (machine to machine, M2M) network, a machine type communication (machine type communication, MTC) network, or another network. For example, the method provided in embodiments of this application may be applied to a communication system including a tag. The method and an apparatus provided in embodiments of this application are based on a same or similar technical concept. Because problem resolving principles of the method and the apparatus are similar, mutual reference may be made to implementations of the apparatus and the method. Repeated descriptions are not described.

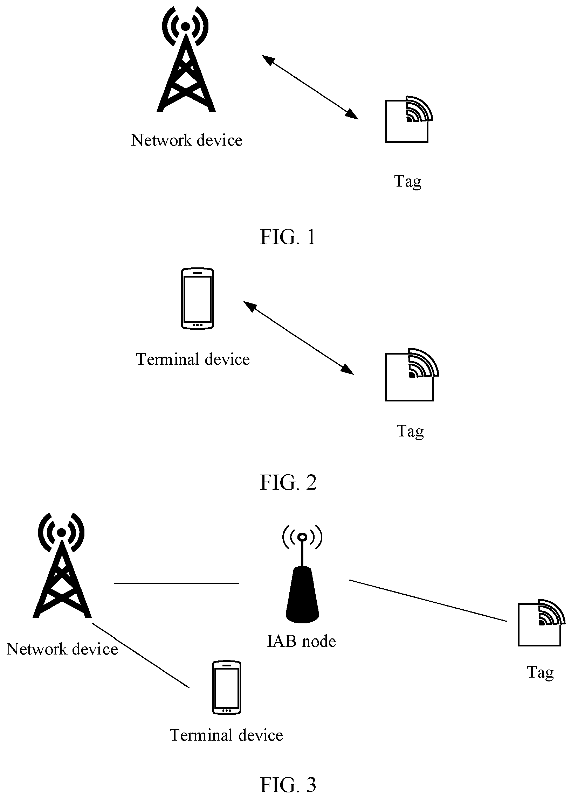

FIG. 1 is a diagram of a communication system to which an embodiment of this application is applicable. As shown in FIG. 1, the communication system includes a network device and a tag (tag). The tag may be an independent device, or the tag may be integrated with a terminal device, in other words, the tag is a part of the terminal device. In the communication system, the network device may have a function of a reader in a radio frequency identification (radio frequency identification, RFID) system, in other words, the network device may serve as a reader to communicate with the tag.

FIG. 2 is a diagram of another communication system to which an embodiment of this application is applicable. As shown in FIG. 2, the communication system includes a terminal device and a tag. The tag may be an independent device, or the tag may be integrated with the terminal device. In the communication system, the terminal device may have a function of a reader in an RFID system, in other words, the terminal device may serve as a reader to communicate with the tag. For example, the terminal device and the tag may communicate with each other through a sidelink (sidelink, SL).

FIG. 3 is a diagram of another communication system to which an embodiment of this application is applicable. As shown in FIG. 3, the communication system includes a network device, an integrated access and backhaul (integrated access and backhaul, IAB) node, and a tag. The communication system may further include another device, for example, include a device like a terminal device. In the communication system, the network device may have a function of a reader in an RFID system, the IAB node may serve as a relay node between the network device and the tag, the tag transmits information to the IAB node, and the IAB node forwards the information to the network device through a Uu interface.

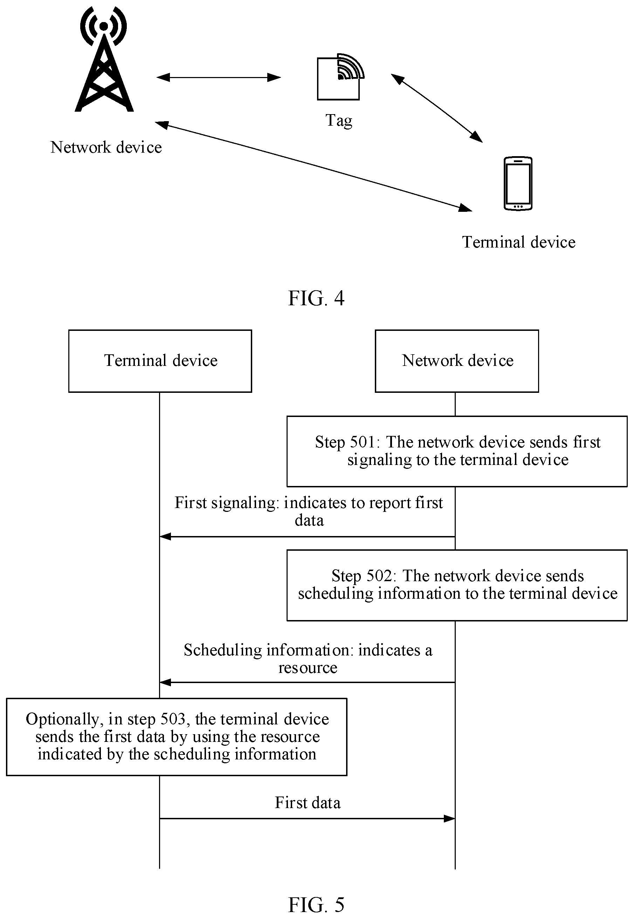

In this application, a communication system including a network device, a terminal device, and a tag may alternatively be a system of a separated architecture. In a communication system, as shown in FIG. 4, a network device and a terminal device may directly communicate with each other. The network device may further have a function of a reader in an RFID system. An uplink connection exists between a tag and the network device, and a downlink connection exists between the tag and the terminal device. The terminal device may transmit information to the tag, and the tag forwards the information to the network device. Alternatively, a downlink connection exists between a tag and the network device, and an uplink connection exists between the tag and the terminal device. The network device may transmit information to the tag, and the tag forwards the information to the terminal device. Energy needed by the tag to send the information may be provided by an excitation signal, and the excitation signal may be from the network device or the terminal device.

The following first explains and describes some terms in embodiments of this application, to facilitate understanding of a person skilled in the art. These explanations and descriptions are merely examples, and do not represent a limitation on these terms.

In this application, transparent transmission means that a device directly forwards a message after receiving the message, but does not sense the received message or process, interpret, or parse the received message. Transparent transmission at a corresponding protocol layer means that after receiving a message, a device does not sense content at a protocol layer at which transparent transmission needs to be performed, and does not process, interpret, or parse the content at the protocol layer at which the transparent transmission needs to be performed, but directly forwards the content at the protocol layer.

In embodiments of this application, the network device may be a device in a wireless network, and the network device may also be referred to as a network apparatus. For example, the network device may be a radio access network (radio access network, RAN) node that connects the terminal device to the wireless network, and may also be referred to as an access network device. The network device includes but is not limited to a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like, or may be a module or a unit that completes some functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the network device are not limited in this application.

In some deployments, the network device may include a central unit (central unit, CU) and a distributed unit (distributed unit, DU). A RAN device including a CU node and a DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is also on the CU-UP.

It may be understood that, in different systems, the CU (including the CU-CP or the CU-UP) or the DU may alternatively have different names, but a person skilled in the art may understand meanings of the names. For example, in an open radio access network (open radio access network, O-RAN) system, the CU may also be referred to as an open CU (open CU, O-CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, and implementing functions of a radio link control (radio link control, RLC) layer, a medium access control (medium access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

A core network device is a general term of a plurality of functional entities used for user management, data transmission, and base station configuration on a network side, including a session management function (session management function, SMF), a user plane function (user plane function, UPF) UPF, an access and mobility management function (access and mobility management function, AMF), and the like.

The terminal device in embodiments of this application may be a wireless terminal apparatus that can receive scheduling and indication information from the network apparatus. The terminal device may be referred to as a terminal apparatus, and may also be referred to as user equipment (user equipment, UE), a mobile station (mobile station, MS), a mobile terminal (mobile terminal, MT), or the like. The terminal apparatus may be a device including a wireless communication function (providing a voice/data connectivity to a user), for example, a handheld device, a vehicle-mounted device, or a vehicle-mounted module that has a wireless connection function. Currently, some examples of the terminal apparatus are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle to everything (vehicle to everything, V2X) communication terminal apparatus, a smart vehicle, an in-vehicle infotainment system (or referred to as a vehicle-mounted transmission unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on board unit (on board unit, OBU), a roadside unit (roadside unit, RSU), a T-box, a chip, a system-on-a-chip (system-on-a-chip, SoC), or the like. The chip or the SoC may be mounted in a vehicle, an OBU, an RSU, or a T-box. The wireless terminal in the industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), an autonomous car (self-driving car or autonomous car), a hybrid electric vehicle (hybrid electric vehicle, HEV), a pure electric vehicle (pure EV or battery EV), a range extended electric vehicle (range extended EV, REEV), a plug-in hybrid electric vehicle (plug-in HEV, PHEV), a new energy vehicle (new energy vehicle), or a roadside apparatus (roadside unit, RSU) The terminal device may alternatively be a device in device-to-device (device-to-device, D2D) communication, for example, an electricity meter or a water meter. In addition, in embodiments of this application, the terminal device may alternatively be a terminal device in an IoT system. An IoT is an important constituent part of future development of information technologies. A main technical feature of the IoT is that an article is connected to a network by using a communication technology, to implement an intelligent network for human-machine interconnection and thing-thing interconnection.

In an example, the terminal device may be referred to as an (ambient internet of things) device (device) (where the device may be an implementation example of the terminal device), and the network device or an intermediate node may be referred to as a reader (reader). Correspondingly, communication links between the device and the reader may include a device to reader (device to reader, DR or D2R) link and a reader to device (reader to device, RD or R2D) link.

Optionally, in descriptions in embodiments of this application, "uplink" may also be understood as "D2R" or "DR", and "downlink" may also be understood as "R2D" or "RD". Further, "uplink signaling" may be "D2R signaling" or "DR signaling", and "downlink signaling" may also be referred to as "R2D signaling" or "RD signaling". However, this is not specifically limited in this application.

The tag may also be referred to as an electronic tag, an RFID tag, or a tag device. Alternatively, the tag may also be referred to as an ambient internet of things (ambient IoT, AIoT) terminal or an AIoT device. In this application, the tag may also be used as a terminal device. Tags may be classified into a passive tag (passive tag), a semi-passive tag (semi-passive tag), and an active tag (active tag). The passive tag and the semi-passive tag may use a backscatter (backscatter)-based communication mode, and the active tag uses a communication mode of actively generating a carrier.

In another classification manner, tags may be classified into the following three types of devices:
a passive terminal, which may also be referred to as a device A (device A): store no energy, cannot independently generate a signal, and perform signal transmission through backscatter;
a semi-passive terminal, which may also be referred to as a device B (device B): store energy, but cannot independently generate a signal, and perform signal transmission through backscatter, where the energy stored by the semi-passive terminal may amplify a backscattering signal; and
an active terminal, which may also be referred to as a device C (device C): store energy, can independently generate a signal, and have an active radio frequency element for transmission. In a wireless communication system, before sending a BSR, the terminal device needs to trigger the BSR first. There are a plurality of events that trigger a BSR. For example, one BSR is triggered when any one of the following events occurs:
   One logical channel that belongs to a logical channel group has uplink data to be sent in a radio link control (radio link control, RLC) or packet data convergence protocol (packet data convergence protocol, PDCP) entity. Alternatively, one logical channel whose priority is higher than that of any channel that belongs to a logical channel group has data to be sent. Alternatively, any logical channel that belongs to a logical channel group has no data to be sent (in other words, a BSR whose buffer size is 0 is sent). A BSR triggered in these cases is referred to as a "regular BSR".

A retransmission BSR timer (retxBSR-timer) expires and the terminal device has available data to be transmitted.

A periodic timer (periodicBSR-timer) expires, triggering a periodic BSR (Periodic BSR).

An uplink resource has been allocated, and a quantity of padding bits is greater than or equal to BSR control information plus a sub-header of the BSR control information. A BSR triggered in this case is a padding BSR.

It can be learned from the foregoing events that trigger the BSR that a BSR triggering and reporting procedure is excessively complex. When an internet of things technology is introduced to the wireless communication system, a structure of a device like the tag (tag) is simple, and the tag may not be able to report a BSR, or a large quantity of resources of the tag need to be consumed in a process of reporting the BSR by the tag. Therefore, in an ambient internet of things scenario, how to simplify a procedure for allocating a resource to the tag is an urgent problem to be resolved.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

When the method provided in this application is applied to the systems in FIG. 1 to FIG. 4, a method performed by the terminal device in embodiments of this application may be implemented by the tag or a module or a chip in the tag in FIG. 1 to FIG. 4, and a method performed by the network device in embodiments of this application may be implemented by the network device or a module or a chip in the network device in FIG. 1 to FIG. 4.

It may be understood that a specific structure of an execution body of the method provided in embodiments of this application is not particularly limited in this application. The method performed by the terminal device may be applied to the terminal device or a module in the terminal device, and the method performed by the network device may be applied to the network device or a module in the network device, provided that a program that records code of the method provided in embodiments of this application can be run to perform communication according to the method provided in embodiments of this application.

In the following procedure, interaction between the terminal device and the network device is used as an example for description. In another implementation, the method performed by the network device may alternatively be performed by the terminal device. In other words, the method provided in this application is also applicable to interaction between terminal devices.

FIG. 5 is a schematic flowchart of a data transmission method according to an embodiment of this application. The method includes the following steps.

Step 501: A network device sends first signaling to a terminal device.

Correspondingly, the terminal device receives the first signaling from the network device.

In an implementation, the first signaling is located in a paging message, a random access response message, or a first message. The first message is a message after the terminal device completes random access. For example, the first message is from a second apparatus or a core network device. In an implementation, the terminal device may be a tag in an ambient internet of things, or a communication apparatus having a function of the tag in the ambient internet of things.

In this application, the first signaling indicates the terminal device to report first data, or the first signaling triggers the terminal device to report the first data. The first signaling may be generated by the network device, or the first signaling may be sent by the core network device to the network device. For example, the core network device may be an AMF. When the network device is replaced with a reader, the first signaling may be sent by the core network device to the network device, then the network device forwards the first signaling to the reader, and finally the reader sends the first signaling to the terminal device. Alternatively, the first signaling is sent by the core network device to the network device, and the network device transparently transmits the first signaling to the terminal device. If the first signaling is from the core network device, the core network device may further send first indication information to the network device, where the first indication information indicates a data size (data size) of the first data. The first indication information indicates the data size, so that the network device can directly determine, based on the first indication information, a size of a resource used for transmission of the first data, and can no longer wait for a buffer status report from the terminal device. In this way, scheduling information is sent when the buffer status report from the terminal device is not received, so that resource scheduling latency can be reduced.

In embodiments of this application, the buffer status report may also be referred to as a storage area status report, a register status report, a user area status report, or the like. The "status report" may be replaced with "to-be-transmitted data" or a "data size/ quantity of bits/ quantity of bytes". The buffer status report may indicate a specific data size, or may indicate a data size range, for example, indicate that a quantity does not exceed a specific number. In this way, bit overheads can be reduced. For example, a bit 00 indicates that the quantity does not exceed 32 bits, a bit 01 indicates that the quantity does not exceed 64 bits, a bit 10 indicates that the quantity does not exceed 256 bits, and a bit 11 indicates that the quantity does not exceed 512 bits. A specific indicated value is not limited.

In this application, the first signaling may be further used by the terminal device to determine whether to send a buffer status report related to the first data. The buffer status report indicates the data size of the first data. The first data may be understood as buffered data to be sent by the terminal device. For example, in Implementation 1, the first signaling includes second indication information, and the second indication information indicates whether to send the buffer status report. If the second indication information indicates not to send the buffer status report, after receiving the first signaling, based on the second indication information, the terminal device may not send the buffer status report. Correspondingly, the network device may not expect to receive the buffer status report. Alternatively, the second indication information and the first signaling may be sent independently. For example, the second indication information may be sent after the first signaling.

In this implementation, the second indication information directly indicates not to send the buffer status report, to reduce complexity of determining, by the terminal device, whether to send the buffer status report, so that power consumption of the terminal device can be reduced. This is particularly applicable to a device like the tag in the ambient internet of things.

Implementation 2: When a signaling type of the first signaling is a preset type, the terminal device does not send the buffer status report; or when a signaling type of the first signaling is not a preset type, the terminal device sends the buffer status report. In this manner, when the signaling type of the first signaling is the preset type, the data size of the first data requested by the first signaling is preset. It may be understood as that there is a correspondence between the signaling type of the first signaling and the data size of the first data. When sending the first signaling, the network device may determine the data size of the first data requested by the first signaling. In this case, the terminal device may not send the buffer status report. The core network device may indicate the signaling type of the first signaling to the network device, so that the network device determines, based on the signaling type of the first signaling, the data size of the first data requested by the first signaling.

For example, the first signaling is inventory signaling, and the first data reported by the terminal device triggered by the first signaling is service data of an inventory service. The service data may be a tag identity (identity, ID) of the terminal device, and a size of the tag ID is fixed. The inventory signaling may include but is not limited to query (Query), query adjustment (QueryAdjust), and query repetition (QueryRep). For another example, the first signaling is read signaling, and the first data reported by the terminal device triggered by the first signaling is data stored by the terminal device. When the terminal device is a tag, a size range of the data stored by the tag is a preset value.

Optionally, after receiving the first signaling, the terminal device may further trigger the buffer status report.

Specifically, the buffer status report may be triggered by a MAC layer of the terminal device.

In an implementation, if the terminal device determines not to send the buffer status report, a logical channel (logical channel, LCH) priority of the buffer status report triggered by the terminal device is the lowest.

The buffer status report sent by the terminal device is carried on a logical channel, and the terminal device may multiplex data of a plurality of logical channels into one medium access control (medium access control, MAC) protocol data unit (protocol data unit, PDU). Because data of a plurality of logical channels may be multiplexed into one MAC PDU, the terminal device may allocate one priority to each logical channel. Data of a logical channel with the highest priority is preferentially included in the MAC PDU, and then data of a logical channel with the second highest priority is included in the MAC PDU. This rule applies until a data upper limit of the MAC PDU is reached. Data of a logical channel with a low priority may never be sent. Therefore, the terminal device sets the logical channel priority of the triggered buffer status report to the lowest priority. In this way, although the buffer status report is triggered, the buffer status report is not sent.

In another implementation, if the terminal device determines not to send the buffer status report, a logical channel of the buffer status report triggered by the terminal device is a closed logical channel.

Because data on the closed logical channel is not multiplexed into a MAC PDU, although the terminal device triggers the buffer status report, the buffer status report is not sent.

In this application, a condition for triggering the buffer status report by the terminal device is not limited. For example, the condition for triggering the buffer status report may include one or more of the following:
1. Data on a terminal device side changes from non-existence to existence. That the data changes from non-existence to existence means that the terminal device side changes from having no data to having data.
2. New data arrives at the terminal device side (where data priorities are not differentiated). That the new data arrives means that one piece of new data arrives at the terminal device side.

Optionally, after the buffer status report is triggered for a period of time, if the terminal device does not receive corresponding scheduling information, the terminal device initiates a random access procedure.

In this application, the terminal device may alternatively not trigger the buffer status report, or not send the buffer status report, or cancel the triggered buffer status report. For example, a condition for not triggering the buffer status report, or not sending the buffer status report, or canceling the triggered buffer status report may include one or more of the following:
1. The terminal device receives uplink scheduling information from a network side, where the uplink scheduling information is used to schedule an uplink resource.
2. The terminal device receives, from the network side, an indication indicating not to report the buffer status report.
3. The terminal device receives the first signaling (for example, the inventory signaling or the read signaling) from the network side, and determines, based on the signaling type of the first signaling, that the BSR does not need to be reported.
4. The logical channel on which the terminal device uploads the buffer status report is closed.

It should be noted that, when determining not to send the buffer status report, the terminal device may alternatively not trigger the buffer status report.

Optionally, if the terminal device sends the buffer status report, the buffer status report indicates the data size of the first data.

It should be noted that, when determining not to send the buffer status report related to the first data, the terminal device does not send the buffer status report related to the first data.

In this application, when the buffer status report is sent, a procedure for sending the buffer status report may be optimized, and efficiency of sending the buffer status report may be improved. Specifically, at least one of the following may exist:
1. Only a regular buffer status report is supported, and a periodic buffer status report is not supported. In this case, the power consumption of the terminal device can be reduced. This is more applicable to a requirement in a low-power-consumption scenario like the ambient internet of things.
2. Buffer status reports in only one format are supported, and a long-format buffer status report and a short-format buffer status report are not distinguished. For example, an existing short-format buffer status report or a buffer status report of a new length may be reused. In this way, a format selection procedure of the terminal device can be reduced, and the power consumption of the terminal device can be reduced.
3. The buffer status report belongs to only one logical channel group, or the buffer status report has only one logical channel. In this case, the buffer status report does not need to include a logical channel indication, so that resource overheads are reduced, and resource utilization is improved.

Step 502: The network device sends the scheduling information to the terminal device, where the scheduling information is used to schedule the resource for transmission of the first data. Correspondingly, the terminal device receives the scheduling information.

In an implementation, if the first signaling is further used by the terminal device to determine not to send the buffer status report related to the first data, the scheduling information is sent when the buffer status report is not received. In this case, the size of the resource indicated by the scheduling information is determined based on the preset data size of the first data. In this implementation, it may be understood as that the network device sends the scheduling information before receiving the buffer status report related to the first data.

Optionally, in another implementation, if the first signaling is further used by the terminal device to determine to send the buffer status report related to the first data, the scheduling information is sent when the buffer status report is received. In this case, the size of the resource indicated by the scheduling information is determined based on the data size indicated by the buffer status report. Optionally, in step 503, the terminal device sends the first data by using the resource indicated by the scheduling information.

Correspondingly, the network device receives the first data by using the resource indicated by the scheduling information.

It should be noted that step 503 is an optional step, and whether the terminal device sends the first data is not limited in this application. Optionally, if the network device receives the first data, the network device may further send the first data to the core network device.

In an implementation, the terminal device sends a second message to the network device by using the resource, and the second message includes the first data. The data size indicated by the first indication information is equal to the data size of the first data, or the data size indicated by the first indication information is equal to a data size of the second message. The second message further includes at least one of a non-access stratum message, an access stratum message header, access stratum signaling, padding (padding), a message prefix, a message suffix, a message preamble (preamble), a mid-amble (mid-amble), and a post-amble (post-amble). The access stratum message header, the access stratum signaling, the padding (padding), the message prefix, the message suffix, the message preamble (preamble), the mid-amble (mid-amble), and the post-amble (post-amble) may also be understood as air interface data, and the air interface data may be understood as message content known to the network device. The access stratum message header may include any access stratum message header, for example, include at least one of an RRC header, a MAC header, an RLC header, and a PDCP header. This is not limited in this application. The access stratum signaling may include any access stratum signaling, for example, include at least one of an RRC service data unit (service data unit, SDU), a MAC control element (control element, CE), and a MAC SDU. This is not limited in this application.

The data size indicated by the first indication information may be equal to a second data size of the first data. Alternatively, the data size indicated by the first indication information may be equal to the data size of the second message, or the data size indicated by the first indication information is less than or equal to a sum of the data size of the first data and at least one of a data size of the access stratum message header, a data size of the access stratum signaling, and a data size of the padding. In this case, the data size indicated by the first indication information is greater than a second data size. For example, the second message includes a non-access stratum message (for example, a NAS (non-access stratum) message or an application layer message), and the second message may further include an access stratum message header. For example, the access stratum message header includes a MAC header and/or an RLC header and/or an AIoT access protocol layer header, or the second message includes at least one of an RLC header and a MAC header obtained by simplifying a MAC control element (control element, CE) and a logical channel identity (logical channel identity, LCID). For example, the access stratum message header may indicate segment information of a message, for example, indicate whether the second message is a segment message, or indicate a message type of the second message.

According to the foregoing method, a procedure of not reporting the buffer status report is provided. The network device or the terminal device may determine, based on the first signaling, whether the terminal device sends the buffer status report. When the terminal device does not send the buffer status report, the power consumption of the terminal device can be reduced, data transmission latency can be reduced, and the resource utilization can be improved.

With reference to the foregoing procedure, the following describes the foregoing process through specific embodiments.

### Example 1

In Example 1, an example in which the terminal device is a tag, the network device is a gNB, the core network device is an AMF, and the first signaling is inventory signaling is used for description. Other cases may be deduced by analogy, and details are not described again.

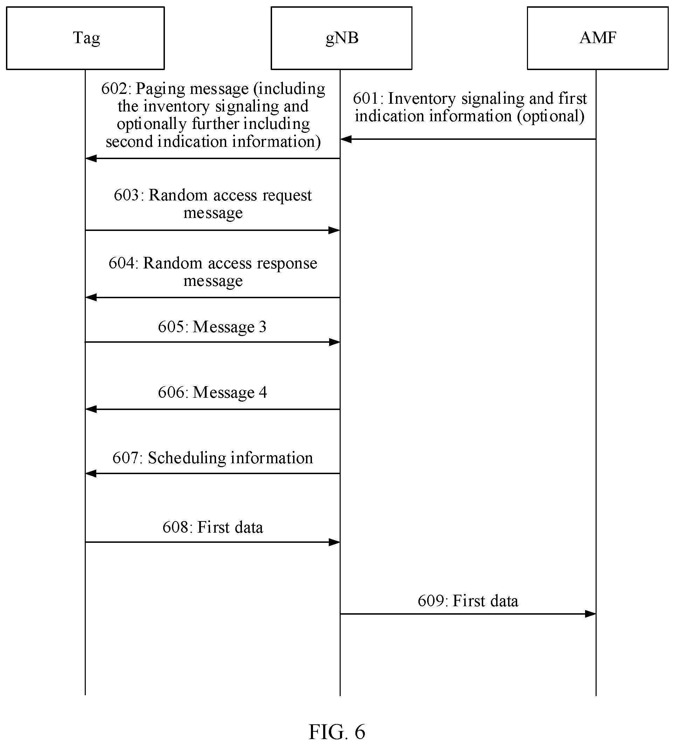

FIG. 6 is a schematic flowchart of a data transmission method according to an embodiment of this application. The method includes the following steps.

Step 601: The AMF sends the inventory signaling to the gNB.

The inventory signaling is used to trigger the tag to report first data. In this case, the first data may be a tag ID of the tag.

Optionally, the AMF may further send first indication information to the gNB. The first indication information indicates a data size of the first data.

Because the first indication information indicates the data size of the first data, when receiving the inventory signaling, the gNB may determine the data size of the first data. Therefore, when scheduling a resource, the gNB does not need to wait for a buffer status report from the tag, so that the gNB can send scheduling information when not receiving the buffer status report.

Step 602: The gNB sends a paging (paging) message to the tag.

The paging message includes the inventory signaling, and the paging message is used to page the tag. The inventory signaling is further used by the tag to determine not to send a buffer status report related to the first data.

If the gNB determines the data size of the first data based on the inventory signaling, it may be determined that the tag does not need to report the buffer status report. In this case, the following implementations may exist:
In an implementation, the inventory signaling further includes second indication information, and the second indication information indicates not to report the buffer status report.

In another implementation, the paging message further includes second indication information, in other words, the second indication information and the inventory signaling are two information elements that are independent of each other.

The second indication information directly indicates not to send the buffer status report, so that complexity of determining, by the tag, whether to send the buffer status report is reduced, and power consumption of the tag can be reduced.

Alternatively, the gNB may not include second indication information in the paging message. This is not limited in this application.

Step 603: The tag sends a random access request message to the gNB.

The random access request message may be a preamble (preamble) or a 16-bit random number generated by the tag.

Alternatively, in embodiments of this application, the random access request message may be one or more of the following: a random number or a temporary identity or a random access identity (used for contention resolution), uplink data, a positioning signal, a reference signal, and the like. The random access request message may be used to (request/initiate) access/random access, or request/initiate access/random access to an access network device, an intermediate node, a second apparatus, or a network, where the intermediate node may be a network device, or may be a terminal device.

Step 604: The gNB sends a random access response message to the tag.

If the tag sends the 16-bit random number to initiate the random access, the random access response message may include the 16-bit random number.

Step 605: The tag sends a message 3 to the gNB.

The message 3 is a message 3 in a random access procedure.

Step 606: The gNB sends a message 4 to the tag.

The message 4 is a message 4 in the random access procedure, and may also be referred to as a contention resolution message.

When the tag determines, based on the inventory signaling, not to send the buffer status report related to the first data, the tag no longer sends the buffer status report.

After the tag randomly accesses the gNB, the following procedure is further included.

Step 607: The gNB sends the scheduling information to the tag, where the scheduling information is used to schedule the resource.

A size of the resource scheduled by using the scheduling information is determined based on a preset data size of the first data.

Step 608: The tag sends the first data to the gNB based on the resource scheduled by using the scheduling information.

Step 609: The gNB sends the first data to the AMF.

In the foregoing procedure, in a process in which the tag is scheduled to upload the first data, because the tag does not need to send the buffer status report, the power consumption of the terminal device can be reduced, data transmission latency can be reduced, and resource utilization can be improved.

### Example 2

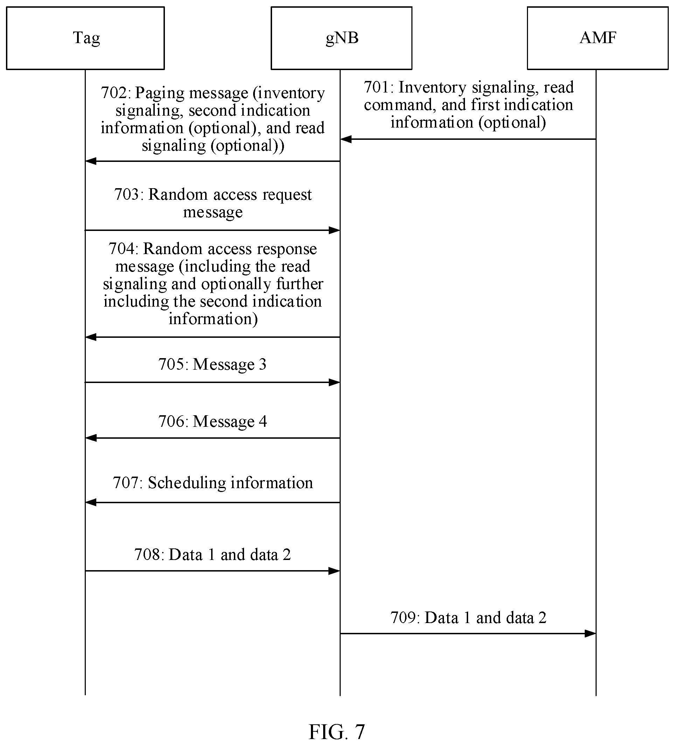

In Example 2, an example in which the terminal device is a tag, the network device is a gNB, the core network device is an AMF, and the first signaling is inventory signaling and read signaling is used for description. Other cases may be deduced by analogy, and details are not described again. FIG. 7 is a schematic flowchart of a data transmission method according to an embodiment of this application. The method includes the following steps.

Step 701: The AMF sends inventory signaling and a read command to the gNB.

The inventory signaling is used to trigger the tag to report data 1. In this case, the data 1 may be a tag ID of the tag.

Read signaling is used to trigger the tag to report data 2. In this case, the data 2 may be data stored by the tag.

In an implementation, the data 1 includes one or more of the following: data in a device storage area (for example, EPC), the tag identity (tag identity, tag ID), and a device identity (device ID). The data 2 may include one or more of the following: user data, encrypted data, a key, sensor data, written data, and the like, buffered data, a feedback (or response) message for downlink data (or downlink signaling, a downlink message, and the like), data stored in a register or a memory, a specific sequence (for example, a positioning sequence and a scrambling sequence), a request message (for example, an authorization request, a registration request, and an authentication request), and the like.

Optionally, in an implementation, the AMF may further send first indication information to the gNB. The first indication information indicates a total data size of the data 1 and the data 2.

In another implementation, the AMF may further send information 1 and information 2 to the gNB. The information 1 indicates a data size of the data 1, and the information 2 indicates a data size of the data 2.

Step 702: The gNB sends a paging message to the tag.

The paging message includes the inventory signaling, and the paging message is used to page the tag. The inventory signaling is further used by the tag to determine not to send a buffer status report related to the data 1.

If the gNB determines the data size of the data 1 based on the inventory signaling, it may be determined that the tag does not need to report the buffer status report. In this case, the following implementations may exist:
The inventory signaling further includes second indication information, and the second indication information indicates not to report the buffer status report. Alternatively, second indication information and the inventory signaling are two information elements that are independent of each other, are both located in the paging message, and are carried in the paging message.

The tag receives the inventory signaling in the paging message, and may determine, based on the second indication information, not to send the buffer status report related to the data 1. Optionally, the paging message may include the read command.

Step 703: The tag sends a random access request message to the gNB.

The random access request message may be a preamble.

Step 704: The gNB sends a random access response message to the tag.

If the paging message does not include the read command, the random access response message may include the read command.

The read command may include the second indication information, or the random access response message may include the second indication information.

The tag receives the read command, and may determine, based on the second indication information, not to send a buffer status report related to the data 2.

Step 705: The tag sends a message 3 to the gNB.

Step 706: The gNB sends a message 4 to the tag.

After the tag randomly accesses the gNB, the following procedure is further included.

Step 707: The gNB sends scheduling information to the tag, where the scheduling information is used to schedule a resource.

A size of the resource scheduled by using the scheduling information is determined based on a preset data size of the data 1 and a preset data size of the data 2.

Step 708: The tag sends the data 1 and the data 2 to the gNB based on the resource scheduled by using the scheduling information.

The tag may send the data 1 and the data 2 to the gNB respectively by using two messages, or may send the data 1 and the data 2 to the gNB by using one message.

Step 709: The gNB sends the data 1 and the data 2 to the AMF.

The foregoing embodiments are merely examples, there are other implementations of the first signaling, and examples are not described herein one by one.

This application further provides a method. When the tag does not report the BSR, the network device may determine, via the core network device, a data size of to-be-transmitted data of the terminal device, to allocate a corresponding resource to the tag. Details are described below.

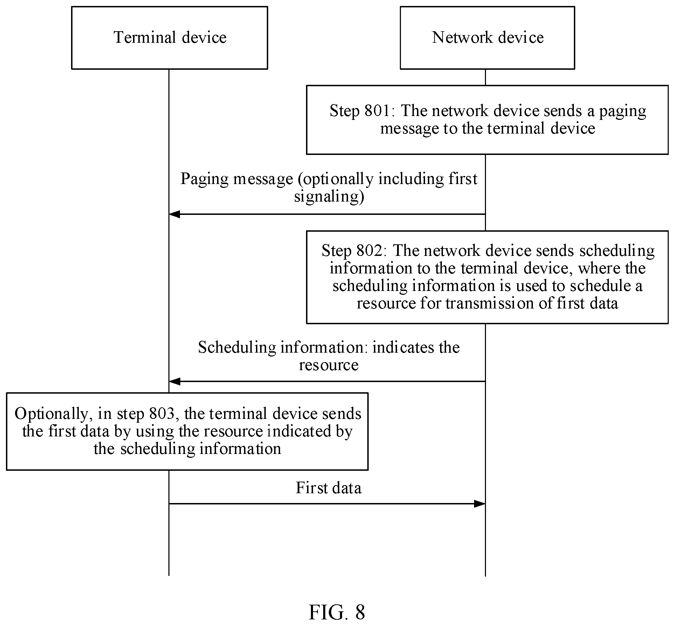

FIG. 8 is a schematic flowchart of a data transmission method according to an embodiment of this application. The method includes the following steps.

Step 801: The network device sends a paging message to the terminal device, where the paging message is used to page the terminal device.

Correspondingly, the terminal device receives the paging message from the network device.

In an implementation, after receiving the paging message, the terminal device determines that the paging message is a message for paging the terminal device, and may send a random access request message to the network device, to initiate a random access procedure.

In this application, the paging message may also be described as an initial trigger message, a trigger message (trigger message), a downlink trigger message (downlink trigger message), a paging-like message (paging-like message), a select (select) signaling, or a reader-to-device trigger message (reader-to-device trigger message). The paging message may indicate the terminal device to access a network/access a network device/access a terminal device (when the terminal device is a relay node)/send data/initiate random access/wait for an access opportunity.

In an implementation, the terminal device may be a tag in an ambient internet of things, or a communication apparatus having a function of the tag in the ambient internet of things.

Step 801 is an optional step, and the network device may alternatively not send the paging message. This is not limited in this application.

Step 802: The network device sends scheduling information to the terminal device, where the scheduling information is used to schedule a resource for transmission of first data.

Correspondingly, the terminal device receives the scheduling information.

In an implementation, the scheduling information is sent when a first buffer status report related to the first data is not received. The first buffer status report related to the first data may indicate a data size of the first data. In this implementation, it may be understood as that the network device sends the scheduling information before receiving the first buffer status report related to the first data.

In an implementation, before sending the paging message to the terminal device, the network device receives first information from the core network device. The network device determines, based on a data size indicated by the first information, the resource for transmission of the first data. The first information indicates the data size, so that the network device can directly determine, based on the first information, a size of the resource used for transmission of the first data, and can no longer wait for the buffer status report from the terminal device. In this way, the scheduling information is sent when the buffer status report from the terminal device is not received, so that resource scheduling latency can be reduced.

It is assumed that the data size of the first data to be transmitted by the terminal device is a second data size, the data size indicated by the first information is a first data size, and the first data size may be greater than or equal to the second data size. For example, a second message further includes at least one of a non-access stratum message, an access stratum message header, access stratum signaling, padding (padding), a message prefix, a message suffix, a message preamble (preamble), a mid-amble (mid-amble), and a post-amble (post-amble). The access stratum message header, the access stratum signaling, the padding (padding), the message prefix, the message suffix, the message preamble (preamble), the mid-amble (mid-amble), and the post-amble (post-amble) may also be understood as air interface data, and the air interface data may be understood as message content known to the network device. The access stratum message header may include any access stratum message header, for example, include at least one of an RRC header, a MAC header, an RLC header, and a PDCP header. This is not limited in this application. The access stratum signaling may include any access stratum signaling, for example, include at least one of an RRC SDU, a MAC CE, and a MAC SDU. This is not limited in this application.

The data size indicated by the first information may be equal to the second data size of the first data. Alternatively, the data size indicated by the first information may be equal to a data size of the second message, or the data size indicated by the first information is less than or equal to a sum of the data size of the first data and at least one of a data size of the access stratum message header, a data size of the access stratum signaling, and a data size of the padding. In this case, the data size indicated by the first information is greater than the second data size. For example, the second message includes a non-access stratum message (for example, a NAS (non-access stratum) message or an application layer message), and the second message may further include an access stratum message header. For example, the access stratum message header includes a MAC header and/or an RLC header and/or an AIoT access protocol layer header, or the second message includes at least one of an RLC header and a MAC header obtained by simplifying a MAC control element (control element, CE) and a logical channel identity (logical channel identity, LCID). For example, the access stratum message header may indicate segment information of a message, for example, indicate whether the second message is a segment message, or indicate a message type of the second message.

Optionally, the network device may alternatively indicate whether the first data size refers to the data size of the second message or the data size of the first data included in the second message. If the first data size refers to the data size of the second message, the data size of the second message is less than or equal to the first data size, and the data size of the first data in the second message is less than the first data size. If the first data size refers to the data size of the first data included in the second message, the data size of the second message may be greater than the first data size, and the data size of the first data in the second message may be equal to the first data size.

How the first information indicates the data size of the first data is not limited in this application. For example, in Implementation 1, the first information directly indicates the data size of the first data. For example, the first information includes the data size of the first data.

Implementation 2: The first information indirectly indicates the data size of the first data. For example, the first information is second data sent to the terminal device, and there is a correspondence between the second data and the data size of the first data. The network device may determine the data size of the first data based on the correspondence. The correspondence may be preset or preconfigured, or may be determined in another manner. This is not limited in this application.

Implementation 3: The first information indirectly indicates the data size of the first data. For example, the first information indicates a service corresponding to the first data, and there is a correspondence between the service corresponding to the first data and the data size of the first data. The network device may determine the data size of the first data based on the correspondence. The correspondence may be preset or preconfigured, or may be determined in another manner. This is not limited in this application. For example, the first information indicates that the first data corresponds to an inventory service, and the first data is service data of the inventory service, where the service data may be a tag identity (identity, ID) of the terminal device, and a size of the tag ID is fixed. Therefore, the network device may determine the data size of the first data based on the inventory service.

In this application, the network device may further send first signaling to the terminal device, where the first signaling indicates the terminal device to report the first data, or the first signaling triggers the terminal device to report the first data. The first signaling may be generated by the network device, or the first signaling may be sent by the core network device to the network device. For example, the core network device may be an AMF. When the network device is replaced with a reader, the first signaling may be sent by the core network device to the network device, then the network device forwards the first signaling to the reader, and finally the reader sends the first signaling to the terminal device. Alternatively, the first signaling is sent by the core network device to the network device, and the network device transparently transmits the first signaling to the terminal device.

In this application, the core network device may include but is not limited to a network element like a mobility management network element, a location management network element, or a tag management network element. This is not limited. The mobility management network element may be an access and mobility management function (access and mobility management function, AMF). The location management network element may be a location management function (location management function, LMF). The tag management network element may be a tag management function (tag management function, TMF), an ambient internet of things function (ambient IoT function, AIoTF), or an ambient internet of things management function (ambient IoT management function, AIoTMF).

In an implementation, the resource may be determined based on the data size indicated by the first information. For example, the size of the resource is determined based on the data size indicated by the first information. For example, a size of data that can be transmitted by using the resource is equal to the data size indicated by the first information. Alternatively, a size of data that can be transmitted by using the resource is greater than the data size indicated by the first information. For example, the data size of the first data to be transmitted by the terminal device is the second data size, the first data is carried in the second message, and the second message includes the first data and a message header. If the data size indicated by the first information refers to the data size of the second message, the size of the data that can be transmitted by using the resource may be equal to the data size indicated by the first information. If the first data size refers to the data size of the first data included in the second message, the size of the data that can be transmitted by using the resource may be greater than the data size indicated by the first information. For example, the size of the data that can be transmitted by using the resource is equal to a sum of the second data size and a data size of the message header.

How the network device sends the first signaling is not limited in this application. For example, the first signaling is located in the paging message, a random access response message, or a first message, where the first message is a message after the terminal device completes random access. The first signaling may further have another function. For example, in an implementation, the first signaling is used to trigger an inventory procedure, and the first data is service data of an inventory service; and in another implementation, the first signaling is used to trigger a read procedure, and the first data is data stored by the terminal device.

In this application, the first signaling may be further used by the terminal device to determine whether to send a buffer status report related to the first data. The buffer status report indicates the data size of the first data. For example, in Implementation 1, the first signaling includes second information, and the second information indicates whether to send the first buffer status report related to the first data. If the second information indicates not to send the first buffer status report related to the first data, after receiving the first signaling, based on the second information, the terminal device may not send the first buffer status report. Correspondingly, the network device may not expect to receive the first buffer status report.

Alternatively, the second information and the first signaling may be sent independently. For example, the second information may be sent after the first signaling. Alternatively, the second information is located in the paging message or the random access response message.

Implementation 2: When a signaling type of the first signaling is a preset type, the terminal device does not send the first buffer status report related to the first data; or when a signaling type of the first signaling is not a preset type, the terminal device sends the first buffer status report. In this manner, when the signaling type of the first signaling is the preset type, the data size of the first data requested by the first signaling is preset. It may be understood as that there is a correspondence between the signaling type of the first signaling and the data size of the first data. When sending the first signaling, the network device may determine the data size of the first data requested by the first signaling. In this case, the terminal device may not send the first buffer status report.

The core network device may indicate the signaling type of the first signaling to the network device, so that the network device determines, based on the signaling type of the first signaling, the data size of the first data requested by the first signaling.

Optionally, after receiving the first signaling, the terminal device may further trigger the first buffer status report. A condition for triggering the first buffer status report by the terminal device and how the terminal device triggers the first buffer status report are not limited. For example, refer to descriptions in step 501. Details are not described herein again. If the terminal device determines not to send the first buffer status report, although the terminal device triggers the first buffer status report, the terminal device does not send the first buffer status report. For details, refer to the descriptions in step 501. Details are not described herein again.

In an implementation, that the scheduling information is sent when the first buffer status report is not received may also be understood as that the network device can send the scheduling information when the terminal device sends no first buffer status report related to the first data. In this case, the resource indicated by the scheduling information is determined based on the data size indicated by the first information. For example, the size of the resource is determined based on the data size indicated by the first information.

In another implementation, if the terminal device sends the first buffer status report related to the first data, the size of the resource indicated by the scheduling information is determined based on the data size indicated by the first buffer status report.

Optionally, in step 803, the terminal device sends the first data by using the resource indicated by the scheduling information.

Correspondingly, the network device receives the first data by using the resource indicated by the scheduling information.

It should be noted that step 803 is an optional step, and whether the terminal device sends the first data is not limited in this application. Optionally, if the network device receives the first data, the network device may further send the first data to the core network device.

In an implementation, the terminal device sends the second message to the network device by using the resource, and the second message includes the first data. The data size indicated by the first information is equal to the data size of the first data, or the data size indicated by the first information is equal to the data size of the second message, or the data size indicated by the first information is equal to a sum of the data size of the first data and at least one of a data size of the access stratum message header and a data size of the access stratum signaling.

In an implementation, the network device may further send third information to the terminal device, where the third information indicates the terminal device to report a second buffer status report before data transmission, and the third information is sent after the terminal device completes the random access. The "data transmission" herein may be understood as transmitting, by the terminal device, other data to the network device after transmitting the first data.

The third information may be sent together with the first data, or may be sent separately from the first data. This is not limited in this application. The third information may explicitly indicate the terminal device to report the second buffer status report before the data transmission. Alternatively, the third information may implicitly indicate the terminal device to report the second buffer status report before the data transmission. For example, the third information indicates a resource configuration, the resource configuration is used for transmission of the second buffer status report, and the terminal device may send the second buffer status report based on the resource configuration. The terminal device may send the second buffer status report only after receiving the third information.

According to the foregoing method, a procedure of not reporting the buffer status report is provided. The network device may determine the data size of the first data based on the first information, to schedule the resource based on the data size without waiting for the buffer status report from the terminal device. The network device performs resource scheduling for the terminal device when the terminal device sends no buffer status report, so that power consumption of the terminal device can be reduced, data transmission latency can be reduced, and resource utilization can be improved. Further, the network device may further directly indicate, by using the second information, not to send the buffer status report, to reduce complexity of determining, by the terminal device, whether to send the buffer status report, so that the power consumption of the terminal device can be reduced. This is particularly applicable to a device like the tag in the ambient internet of things.

With reference to the foregoing procedure, the foregoing process is described by using an example in which the terminal device is a tag, the network device is a gNB, and the core network device is an AMF. In this procedure, the AMF directly indicates, to the gNB, a data size that needs to be reported by the tag, so that the gNB can perform resource scheduling for the tag when not receiving a buffer status report. Details are described below.

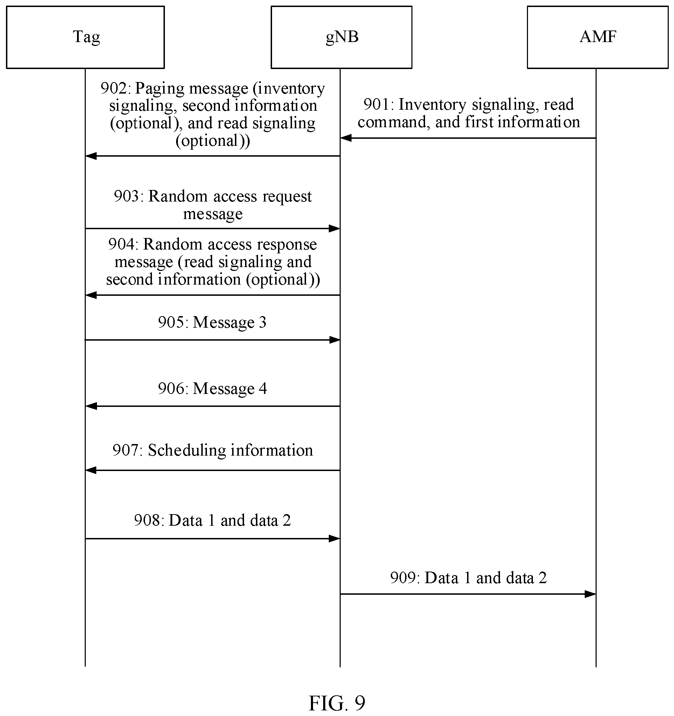

FIG. 9 is a schematic flowchart of a data transmission method according to an embodiment of this application. The method includes the following steps.

Step 901: The AMF sends inventory signaling, a read command, and first information to the gNB. The inventory signaling is used to trigger the tag to report data 1. In this case, the data 1 may be a tag ID of the tag.

Read signaling is used to trigger the tag to report data 2. In this case, the data 2 may be data stored by the tag.

The first information may indicate a total data size of the data 1 and the data 2, or the first information separately indicates a data size of the data 1 and a data size of the data 2.

Step 902: The gNB sends a paging message to the tag.

The paging message includes the inventory signaling, and the paging message is used to page the tag.

The paging message further includes second information, where the second information indicates not to report a buffer status report.

The tag receives the inventory signaling in the paging message, and may determine, based on the second information, not to send a buffer status report related to the data 1.

Optionally, the paging message may further include the read command.

Step 903: The tag sends a random access request message to the gNB.

The random access request message may be a preamble.

Step 904: The gNB sends a random access response message to the tag.

If the paging message does not include the read command, the random access response message may include the read command.

The random access response message may include the second information.

The tag receives the read command, and may determine, based on the second information, not to send a buffer status report related to the data 2.

Step 905: The tag sends a message 3 to the gNB.

Step 906: The gNB sends a message 4 to the tag.

After the tag randomly accesses the gNB, the following procedure is further included.

Step 907: The gNB sends scheduling information to the tag, where the scheduling information is used to schedule a resource.

A size of the resource scheduled by using the scheduling information is determined based on a preset data size of the data 1 and a preset data size of the data 2.

Step 908: The tag sends the data 1 and the data 2 to the gNB based on the resource scheduled by using the scheduling information.

The tag may send the data 1 and the data 2 to the gNB respectively by using two messages, or may send the data 1 and the data 2 to the gNB by using one message.

Step 909: The gNB sends the data 1 and the data 2 to the AMF.

In the foregoing procedure, the gNB may determine the data size of the data 1 and the data size of the data 2 based on the first information, to schedule the resource for the data 1 and the data 2 without waiting for the buffer status report from the tag. The gNB performs resource scheduling for the tag when the tag sends no buffer status report, so that power consumption of the tag can be reduced, data transmission latency can be reduced, and resource utilization can be improved.

In the following procedure, interaction between a first apparatus and a second apparatus is used as an example for description. The second apparatus may be a terminal device, an access network device, or a network device, or the second apparatus may be a module (for example, a chip or a modem) in the terminal device, the access network device, or the network device. The first apparatus may be a tag (for example, an AIoT tag) or a terminal device, or the first apparatus may be a module (for example, a chip or a modem) in the tag or the terminal device.

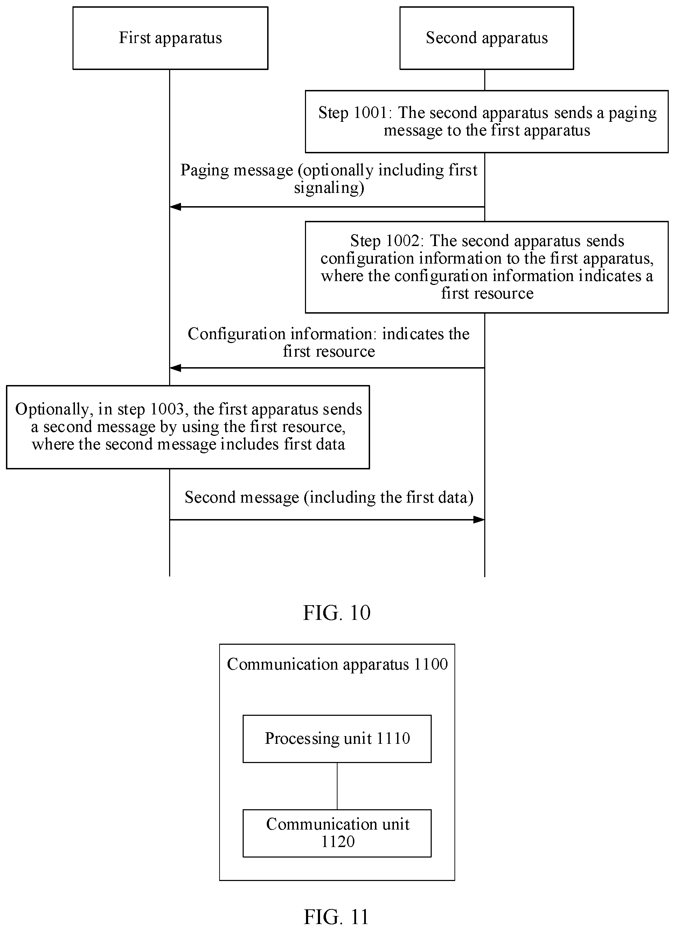

FIG. 10 is a schematic flowchart of a data transmission method according to an embodiment of this application. The method includes the following steps.

Step 1001: The second apparatus sends a paging message to the first apparatus, where the paging message is used to page the first apparatus.

Correspondingly, the first apparatus receives the paging message from the second apparatus.

In an implementation, after receiving the paging message, the first apparatus determines that the paging message is a message for paging the first apparatus, and may send a random access request message to the second apparatus, to initiate a random access procedure.

In this application, the paging message may also be described as an initial trigger message, a trigger message (trigger message), a downlink trigger message (downlink trigger message), a paging-like message (paging-like message), a select (select) signaling, or a reader-to-device trigger message (reader-to-device trigger message). The paging message may indicate the terminal device to access a network/access a network device/access a terminal device (when the terminal device is a relay node)/send data/initiate random access/wait for an access opportunity.

Step 1001 is an optional step, and the second apparatus may alternatively not send the paging message. This is not limited in this application.

Optionally, the second apparatus may further send first signaling to the first apparatus. In an implementation, the first signaling is located in the paging message, a random access response message, a contention resolution success message, or a first message, or the first signaling is the paging message, a random access response message, a contention resolution success message, or a first message. The first message is a message received after the first apparatus accesses the second apparatus. For example, the first message is from the second apparatus or a core network device.

In an implementation, the first apparatus may be a tag in an ambient internet of things, or a communication apparatus having a function of the tag in the ambient internet of things.

In this embodiment, the first signaling indicates the first apparatus to report first data, or the first signaling triggers the first apparatus to report first data. The first data may be understood as buffered data to be sent by the first apparatus, or the first data may be data to be transmitted by the first apparatus, or the first data may be data requested by the second apparatus from the first apparatus.

The first signaling may be generated by the second apparatus, or the first signaling may be sent by the core network device to the second apparatus. For example, the core network device may be an AMF or an AIoTF. When the second apparatus is a reader, the first signaling may be sent by the core network device to the network device, then the network device forwards the first signaling to the second apparatus, and finally the second apparatus sends the first signaling to the first apparatus. Alternatively, the first signaling is sent by the core network device to the second apparatus, and the second apparatus transparently transmits the first signaling to the first apparatus.

In this embodiment, before sending the paging message to the first apparatus, the second apparatus may further receive first information from the core network device, where the first information indicates a first data size. The second apparatus determines, based on the first data size indicated by the first information, a resource to be scheduled for the first apparatus. The first information indicates the first data size, so that the second apparatus can directly determine a first resource based on the first data size without waiting for a buffer status report. In this way, the resource is scheduled for the first apparatus when the buffer status report from the first apparatus is not received, for example, scheduling information is sent, so that resource scheduling latency can be reduced.

How the first information indicates the first data size is not limited in this application. For example, in Implementation 1, the first information directly indicates the first data size. For example, the first information includes the first data size.

Implementation 2: The first information indirectly indicates the first data size. For example, the first information is second data sent to the first apparatus, and there is a correspondence between the second data and the first data size. The second apparatus may determine the first data size based on the correspondence. The correspondence may be preset or preconfigured, or may be determined in another manner. This is not limited in this application.

Implementation 3: The first information indirectly indicates the first data size. For example, the first information indicates a first service, and there is a correspondence between the first service and the first data size. The second apparatus may determine the first data size based on the correspondence. The correspondence may be preset or preconfigured, or may be determined in another manner. This is not limited in this application. For example, the first service indicated by the first information is an inventory service, service data of the inventory service may be a tag identity (identity, ID) of the first apparatus, and a data size of the tag ID is fixed. Therefore, the second apparatus may determine the first data size based on the inventory service.

It is assumed that a data size of the first data to be transmitted by the first apparatus is a second data size, and the first data size may be greater than or equal to the second data size. For example, the first data is carried in a second message, the second message includes the first data, and the second message further includes at least one of a non-access stratum message, an access stratum message header, access stratum signaling, padding (padding), a message prefix, a message suffix, a message preamble (preamble), a mid-amble (mid-amble), and a post-amble (post-amble). The access stratum message header, the access stratum signaling, the padding, the message prefix, the message suffix, the message preamble (preamble), the mid-amble (mid-amble), and the post-amble (post-amble) may also be understood as air interface data, and the air interface data may be understood as message content known to the network device. The access stratum message header may include any access stratum message header, for example, include at least one of an RRC header, a MAC header, an RLC header, and a PDCP header. This is not limited in this application. The access stratum signaling may include any access stratum signaling, for example, include at least one of an RRC SDU, a MAC CE, and a MAC SDU. This is not limited in this application. The data size indicated by the first information may be equal to the second data size of the first data. Alternatively, the data size indicated by the first information may be equal to a data size of the second message, or the data size indicated by the first information may be less than or equal to a sum of the data size of the first data and at least one of a data size of the access stratum message header, a data size of the access stratum signaling, and a data size of the padding. In this case, the data size indicated by the first information is greater than the second data size. For example, the second message includes a non-access stratum message (for example, a NAS (non-access stratum) message or an application layer message), and the second message may further include an access stratum message header. For example, the access stratum message header includes a MAC header and/or an RLC header and/or an AIoT access protocol layer header, or the second message includes at least one of an RLC header and a MAC header obtained by simplifying a MAC control element (control element, CE) and a logical channel identity (logical channel identity, LCID). Optionally, the second message may further include padding (padding). For example, the access stratum message header may indicate segment information of a message, for example, indicate whether the second message is a segment message, or indicate a message type of the second message.

Optionally, the second apparatus may alternatively indicate whether the first data size refers to the data size of the second message transmitted by the first apparatus or the data size of the first data included in the second message. If the second apparatus does not indicate the foregoing information, whether the first data size refers to the data size of the second message transmitted by the first apparatus or the data size of the first data included in the second message may be agreed on.

If the first data size refers to the data size of the second message transmitted by the first apparatus, the data size of the second message transmitted by the first apparatus is less than or equal to the first data size, and the data size of the first data in the second message is less than the first data size. If the first data size refers to the data size of the first data included in the second message transmitted by the first apparatus, the data size of the second message transmitted by the first apparatus may be greater than the first data size, and the data size of the first data in the second message may be equal to the first data size.

In this application, the first signaling may be further used by the first apparatus to determine whether to send a first buffer status report. The first apparatus may determine, based on the first signaling, whether to send the first buffer status report. The first buffer status report indicates a fourth data size, and the fourth data size may be a data size of a message or data to be transmitted by the first apparatus.

For example, in Implementation 1, the first signaling includes second information, and the second information indicates whether to send the first buffer status report. If the second information indicates not to send the first buffer status report, after receiving the first signaling, based on the second information, the first apparatus may not send the first buffer status report. Correspondingly, the second apparatus may not expect to receive the first buffer status report. Alternatively, the second information and the first signaling may be sent independently. For example, the second information may be sent after the first signaling.

In this implementation, the second information directly indicates not to send the first buffer status report, to reduce complexity of determining, by the first apparatus, whether to send the first buffer status report, so that power consumption of the first apparatus can be reduced. This is particularly applicable to a device like the tag in the ambient internet of things.

Implementation 2: When a signaling type of the first signaling is a preset type or the first signaling is preset signaling, the first apparatus does not send the first buffer status report; or when a signaling type of the first signaling is not a preset type or the first signaling is not preset signaling, the first apparatus sends the first buffer status report.

When the second apparatus is a network device, the core network device may indicate the signaling type of the first signaling to the network device, so that the network device determines, based on the signaling type of the first signaling, the data size of the first data requested by the first signaling.

In this implementation, when the signaling type of the first signaling is the preset type, or the first signaling is the preset signaling, a third data size of data requested by the first signaling may be preset. It may be understood as that there is a correspondence between the signaling type of the first signaling or the first signaling and the third data size. When sending the first signaling, the second apparatus may determine that a data size of the data requested by the first signaling is the third data size. Based on the first signaling, if the first apparatus does not send the first buffer status report, correspondingly, the second apparatus may not expect to receive the first buffer status report. In this case, the second apparatus may schedule a resource for the first apparatus based on the third data size without waiting for the first buffer status report from the first apparatus. In this way, the resource is scheduled for the first apparatus when the first buffer status report from the first apparatus is not received, for example, the scheduling information is sent, so that the resource scheduling latency can be reduced.

For example, the first signaling is inventory signaling, and the first data reported by the first apparatus triggered by the first signaling is service data of an inventory service. The service data may be a tag identity (identity, ID) of the first apparatus, and a data size of the tag ID is fixed. The inventory signaling may include but is not limited to query (Query), query adjustment (QueryAdjust), and query repetition (QueryRep). For another example, the first signaling is read signaling, and the first data reported by the first apparatus triggered by the first signaling is data stored by the first apparatus. When the first apparatus is a tag, a size range of the data stored by the tag is a preset value.

Optionally, the third data size may refer to the data size of the second message transmitted by the first apparatus, or may refer to the data size of the first data included in the second message. If the third data size refers to the data size of the second message transmitted by the first apparatus, the data size of the second message transmitted by the first apparatus is less than or equal to the third data size, and the data size of the first data in the second message is less than the third data size. If the third data size refers to the data size of the first data included in the second message transmitted by the first apparatus, the data size of the second message transmitted by the first apparatus may be greater than the third data size, and the data size of the first data in the second message may be equal to the third data size.

The first data size may be the same as or different from the third data size. If the first apparatus determines the first data size based on the first indication information, and determines the third data size based on the first signaling, the resource to be scheduled for the first apparatus may be determined based on the first data size or the third data size. Specifically, whether the resource is scheduled for the first apparatus based on the first data size or the third data size is not limited in this application.

Optionally, after receiving the first signaling, the first apparatus may further trigger the buffer status report.

Specifically, the buffer status report may be triggered by a MAC layer of the first apparatus.

In an implementation, if the first apparatus determines not to send the first buffer status report, a logical channel (logical channel, LCH) priority of the first buffer status report triggered by the first apparatus is the lowest.

The first buffer status report sent by the first apparatus is carried on a logical channel, and the first apparatus may multiplex data of a plurality of logical channels into one medium access control (medium access control, MAC) protocol data unit (protocol data unit, PDU). Because data of a plurality of logical channels may be multiplexed into one MAC PDU, the first apparatus may allocate one priority to each logical channel. Data of a logical channel with the highest priority is preferentially included in the MAC PDU, and then data of a logical channel with the second highest priority is included in the MAC PDU. This rule applies until a data upper limit of the MAC PDU is reached. Data of a logical channel with a low priority may never be sent. Therefore, the first apparatus sets the logical channel priority of the triggered first buffer status report to the lowest priority. In this way, although the first buffer status report is triggered, the first buffer status report is not sent.

In another implementation, if the first apparatus determines not to send the first buffer status report, a logical channel of the first buffer status report triggered by the first apparatus is a closed logical channel.

Because data on the closed logical channel is not multiplexed into a MAC PDU, although the first apparatus triggers the first buffer status report, the first buffer status report is not sent.

In this application, a condition for triggering the buffer status report by the first apparatus is not limited. For example, refer to descriptions in step 501. Details are not described herein again.

Optionally, after the first buffer status report is triggered for a period of time, if the first apparatus does not receive corresponding scheduling information, the terminal device initiates the random access procedure.

In this application, the first apparatus may alternatively not trigger the first buffer status report, or not send the first buffer status report, or cancel the triggered first buffer status report. For example, a condition for not triggering the first buffer status report, not sending the first buffer status report, or canceling the triggered first buffer status report is not limited. For example, refer to the descriptions in step 501. Details are not described herein again.

It should be noted that, when determining not to send the first buffer status report, the first apparatus may alternatively not trigger the first buffer status report.

Optionally, if the first apparatus sends the first buffer status report, the first buffer status report indicates the fourth data size.

It should be noted that, when determining not to send the buffer status report related to the first data, the first apparatus does not send the buffer status report related to the first data.

In this application, when the first buffer status report is sent, a procedure for sending the first buffer status report may be optimized, and efficiency of sending the first buffer status report may be improved. Specifically, at least one of the following may exist:
1. Only a regular buffer status report is supported, and a periodic buffer status report is not supported. In this case, the power consumption of the first apparatus can be reduced. This is more applicable to a requirement in a low-power-consumption scenario like the ambient internet of things.
2. Buffer status reports in only one format are supported, and a long-format buffer status report and a short-format buffer status report are not distinguished. For example, an existing short-format buffer status report or a buffer status report of a new length may be reused. In this way, a format selection procedure of the first apparatus can be reduced, and the power consumption of the first apparatus can be reduced.
3. The buffer status report belongs to only one logical channel group, or the buffer status report has only one logical channel. In this case, the buffer status report does not need to include a logical channel indication, so that resource overheads are reduced, and resource utilization is improved.

Step 1002: The second apparatus sends configuration information to the first apparatus, where the configuration information indicates the first resource or a first transport block size.

Correspondingly, the first apparatus receives the configuration information.

The configuration information may also be referred to as scheduling information, parameter information, indication information, or the like. A specific name of the configuration information is not limited in this application. The configuration information may be carried in at least one of the first signaling, the first message, the random access response message, and the contention resolution success message.

That the configuration information indicates the first resource may also be understood as that the configuration information is used to schedule, configure, indicate, determine, or associate the first resource. The first transport block size indicates a size of data to be sent by the first apparatus. For example, the data size of the second message is determined based on the first transport block size. In an implementation, the first resource may be determined based on the first data size. For example, a size of the first resource is determined based on the first data size. For example, a size of data that can be transmitted by using the first resource is equal to the first data size. Alternatively, a size of data that can be transmitted by using the first resource is greater than the first data size. For example, the data size of the first data to be transmitted by the first apparatus is the second data size, the first data is carried in the second message, and the second message includes the first data and a message header. If the first data size refers to the data size of the second message transmitted by the first apparatus, the size of the data that can be transmitted by using the first resource may be equal to the first data size. If the first data size refers to the data size of the first data included in the second message transmitted by the first apparatus, the size of the data that can be transmitted by using the first resource may be greater than the first data size. For example, the size of the data that can be transmitted by using the first resource is equal to a sum of the second data size and a data size of the message header.

In another implementation, the first resource may be determined based on the third data size corresponding to the signaling type of the first signaling. For example, the size of the first resource is determined based on the third data size. For example, the size of the data that can be transmitted by using the first resource is greater than or equal to the third data size.

For example, the data size of the first data to be transmitted by the first apparatus is the second data size, the first data is carried in the second message, and the second message includes the first data and a message header. If the third data size refers to the data size of the second message, the size of the data that can be transmitted by using the first resource may be equal to the third data size. If the third data size refers to the data size of the first data included in the second message, the size of the data that can be transmitted by using the first resource may be greater than the third data size. For example, the size of the data that can be transmitted by using the first resource is equal to a sum of the second data size and a data size of the message header.

In an implementation, if the first apparatus determines, based on the first signaling, not to send the buffer status report related to the first data, the configuration information is sent when the buffer status report is not received. In this case, the size of the first resource indicated by the configuration information is determined based on the first data size. In this implementation, it may be understood as that the second apparatus sends the configuration information without receiving the buffer status report related to the first data.

Optionally, in another implementation, if the first apparatus determines, based on the first signaling, to send the buffer status report related to the first data, the configuration information is sent when the buffer status report is received. In this case, the size of the first resource indicated by the configuration information is determined based on the data size indicated by the buffer status report. Optionally, in step 1003, the first apparatus sends the second message by using the first resource, where the second message includes the first data.

Correspondingly, the second apparatus receives the second message by using the first resource. The second message may also be understood as data, signaling, information, or the like.

When the data size of the first data to be transmitted by the first apparatus is less than the first transport block size, the second message further includes a padding (padding) part, so that the size of the second message can be equal to the first transport block size. In another implementation, the size of the second message is less than or equal to the first transport block size.

As described above, the data size of the first data is the second data size, and the first data size may be greater than or equal to the second data size. For example, the second message includes the first data and a message header. The first data size may be equal to the second data size of the first data. Alternatively, the first data size may be equal to the data size of the second message, in other words, the first data size is equal to a sum of the second data size and a data size of the message header. In this case, the first data size is greater than the second data size. For example, the second message is a non-access stratum (non-access stratum, NAS) message, and a message header of the NAS message includes a MAC header and/or an RLC header, or a message header of the NAS message includes at least one of an RLC header and a MAC header obtained by simplifying a MAC control element (control element, CE) and a logical channel identity (logical channel identity, LCID).

In an implementation, the second apparatus may further send third information to the first apparatus, where the third information indicates the first apparatus to report a second buffer status report before data transmission, and the third information is sent after the first apparatus completes the random access. The "data transmission" herein may be understood as transmitting, by the first apparatus, other data (for example, third data or a third message) to the second apparatus after transmitting the second message. The second buffer status report indicates a fifth data size, and the fifth data size is a data size of the third data or the third message to be transmitted by the first apparatus.

The third information may be sent together with the first data, or may be sent separately from the first data. This is not limited in this application. The third information may explicitly indicate the first apparatus to report the second buffer status report before the data transmission. Alternatively, the third information may implicitly indicate the first apparatus to report the second buffer status report before the data transmission. For example, the third information indicates a resource configuration, the resource configuration is used for transmission of the second buffer status report, and the first apparatus may send the second buffer status report based on the resource configuration. The first apparatus may send the second buffer status report only after receiving the third information.

It should be noted that step 1003 is an optional step, and whether the first apparatus sends the second message is not limited in this application. Optionally, if receiving the second message, the second apparatus may further forward the second message to the core network device.

According to the foregoing method, a procedure of not reporting the buffer status report is provided. The second apparatus or the first apparatus may determine, based on the first signaling, whether the first apparatus sends the buffer status report. When the first apparatus does not send the buffer status report, the power consumption of the first apparatus can be reduced, data transmission latency can be reduced, and the resource utilization can be improved.

It may be understood that, to implement functions in the foregoing embodiments, the network device, the terminal device, and the core network device include corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraint conditions of technical solutions.

The following are diagrams of possible structures of communication apparatuses according to embodiments of this application. The communication apparatuses may be configured to implement a function of the network device, the terminal device, or the core network device in the foregoing method embodiments, and therefore can also implement beneficial effects of the foregoing method embodiments.

As shown in FIG. 11, a communication apparatus 1100 includes a processing unit 1110 and a communication unit 1120. The communication apparatus 1100 is configured to implement a function of the terminal device, the network device, or the core network device in the foregoing method embodiments.

When the communication apparatus 1100 is configured to implement the function of the network device in the method embodiment shown in FIG. 5:
The processing unit is configured to send first signaling to the terminal device via the communication unit, where the first signaling indicates the terminal device to report first data, and the first signaling is used by the terminal device to determine not to send a buffer status report related to the first data.

The processing unit is configured to send scheduling information to the terminal device via the communication unit, where the scheduling information is used to schedule a resource for transmission of the first data, and a size of the resource is determined based on a preset data size of the first data.

In a possible implementation, the scheduling information is sent when the buffer status report is not received.

In a possible implementation, the communication unit is further configured to receive the first signaling and first indication information from the core network device, where the first indication information indicates a data size of the first data.

In a possible implementation, the first signaling is inventory signaling, and the first data is service data of an inventory service.

In a possible implementation, the first signaling is read signaling, and the first data is data stored by the terminal device.

In a possible implementation, the first signaling is located in a paging message, a random access response message, or a first message, where the first message is a message after the terminal device completes random access.

In a possible implementation, the first signaling further includes second indication information, and the second indication information indicates not to send the buffer status report.

In a possible implementation, the terminal device is a tag in an ambient internet of things.

When the communication apparatus 1100 is configured to implement the function of the terminal device in the method embodiment shown in FIG. 5:
The communication unit is configured to receive first signaling from the network device, where the first signaling indicates the terminal device to report first data.

The processing unit is configured to determine, based on the first signaling, not to send a buffer status report related to the first data.

The communication unit is configured to receive scheduling information from the network device, where the scheduling information is used to schedule a resource, the resource is used for transmission of the first data, and a size of the resource is determined based on a preset data size of the first data.

In a possible implementation, the processing unit is further configured to trigger the buffer status report, where a logical channel priority of the triggered buffer status report is the lowest, or a logical channel of the triggered buffer status report is a closed logical channel.

In a possible implementation, the processing unit is configured to: when a signaling type of the first signaling is a preset type, determine not to send the buffer status report.

In a possible implementation, the first signaling further includes second indication information, where the second indication information indicates not to send the buffer status report; and the determining, based on the first signaling, not to send the buffer status report related to the first data includes: determining, based on the second indication information, not to send the buffer status report.

In a possible implementation, the first signaling is inventory signaling, and the first data is service data of an inventory service.

In a possible implementation, the first signaling is read signaling, and the first data is data stored by the terminal device.

In a possible implementation, the first signaling is located in a paging message, a random access response message, or a first message, where the first message is a message after the terminal device completes random access.

When the communication apparatus 1100 is configured to implement the function of the core network device in the foregoing method embodiment:
The processing unit is configured to determine first signaling, where the first signaling indicates the terminal device to report first data.

The communication unit is configured to send the first signaling and first indication information to the network device, where the first indication information indicates a data size of the first data. When the communication apparatus 1100 is configured to implement the function of the network device in the method embodiment shown in FIG. 8:
The processing unit is configured to send a paging message to the terminal device via the communication unit, where the paging message is used to page the terminal device.

The processing unit is configured to send scheduling information to the terminal device via the communication unit, where the scheduling information is used to schedule a resource for transmission of first data, the resource is determined based on a data size indicated by first information, and the first information is from the core network device.

When the communication apparatus 1100 is configured to implement the function of the terminal device in the method embodiment shown in FIG. 8:
The processing unit is configured to receive a paging message from the network device via the communication unit, where the paging message is used to page the terminal device.

The processing unit is configured to receive scheduling information from the network device via the communication unit, where the scheduling information is used to schedule a resource for transmission of first data, the resource is determined based on a data size indicated by first information, and the first information is from the core network device.

When the communication apparatus 1100 is configured to implement the function of the core network device in the foregoing method embodiment:
The processing unit is configured to determine first information, where the first information indicates a data size of first data.

The communication unit is configured to send the first information to the network device.

When the communication apparatus 1100 is configured to implement the function of the second apparatus in the foregoing method embodiment:
The processing unit is configured to send configuration information to a first apparatus via the communication unit, where the configuration information indicates a first resource or a first transport block size, the first resource is determined based on a first data size indicated by first information, the first transport block size indicates a size of data to be sent by the first apparatus, and the first information is from the core network device.

When the communication apparatus 1100 is configured to implement the function of the first apparatus in the foregoing method embodiment:
The processing unit is configured to receive configuration information from a second apparatus via the communication unit, where the configuration information indicates a first resource or a first transport block size, the first resource is determined based on a first data size indicated by first information, the first transport block size indicates a size of data to be sent by the first apparatus, and the first information is from the core network device.

When the communication apparatus 1100 is configured to implement the function of the core network device in the foregoing method embodiment:
The processing unit is configured to determine first information, where the first information indicates a first data size.

The communication unit is configured to send the first information to the second apparatus.

For more detailed descriptions about the processing unit 1110 and the communication unit 1120, directly refer to related descriptions in the foregoing method embodiments. Details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

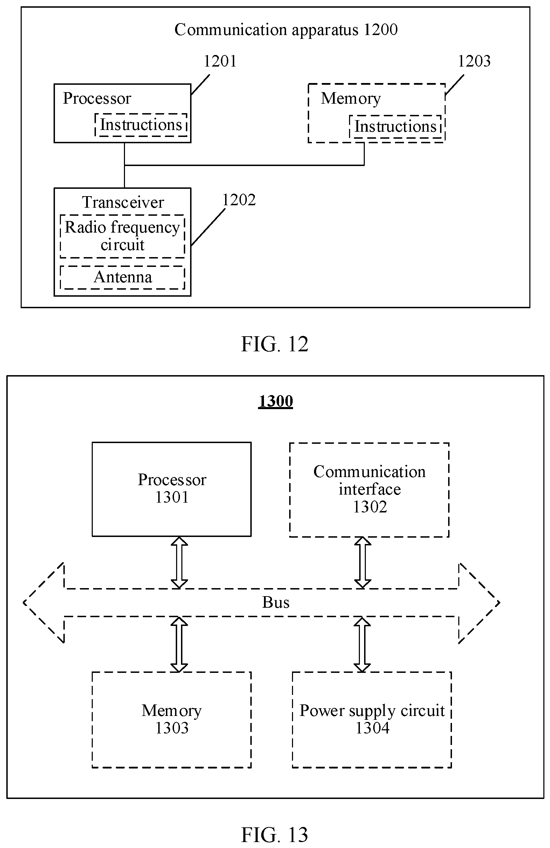

In another possible product form, the terminal device, the network device, or the core network device in embodiments of this application may be implemented by using a general bus architecture. For ease of description, FIG. 12 is a diagram of a structure of a communication apparatus 1200 according to an embodiment of this application. The communication apparatus 1200 includes a processor 1201 and a transceiver 1202. The communication apparatus 1200 may be a terminal device, or a chip or a chip system in the terminal device. Alternatively, the communication apparatus 1200 may be a network device, or a chip or a module in the network device. FIG. 12 shows only main components of the communication apparatus 1200. In addition to the processor 1201 and the transceiver 1202, the communication apparatus 1200 may further include a memory 1203 and an input/output apparatus (not shown in the figure).

Optionally, the processor 1201 is mainly configured to: process a communication protocol and communication data, control the entire communication apparatus, execute a software program, and process data of the software program. The memory 1203 is mainly configured to store the software program and the data. The transceiver 1202 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1201, the transceiver 1202, and the memory 1203 may be connected through a communication bus.

After the communication apparatus is powered on, the processor 1201 may read the software program in the memory 1203, interpret and execute instructions of the software program, and process the data of the software program. When data needs to be sent wirelessly, the processor 1201 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in hardware implementation, a person skilled in the art may figure out that the communication apparatus 1100 may be in a form of the communication apparatus 1200 shown in FIG. 12.

In an example, a function/an implementation process of the processing unit 1110 in FIG. 11 may be implemented by the processor 1201 in the communication apparatus 1200 shown in FIG. 12 by invoking computer-executable instructions stored in the memory 1203. A function/an implementation process of the communication unit 1120 in FIG. 11 may be implemented by the transceiver 1202 in the communication apparatus 1200 shown in FIG. 12.

In still another possible product form, the terminal device, the network device, or the core network device in this application may use a composition structure shown in FIG. 13, or include components shown in FIG. 13. FIG. 13 is a diagram of composition of a communication apparatus 1300 according to this application.

As shown in FIG. 13, the communication apparatus 1300 includes at least one processor 1301. Optionally, the communication apparatus further includes a communication interface 1302.

When related program instructions are executed in the at least one processor 1301, the communication apparatus 1300 may be caused to implement the method provided in any one of the foregoing embodiments and any possible design thereof. Alternatively, the processor 1301 is configured to implement, by using a logic circuit or by executing code instructions, the method provided in any one of the foregoing embodiments and any possible design thereof.

The communication interface 1302 may be configured to receive the program instructions and transmit the program instructions to the processor. Alternatively, the communication interface 1302 may be configured to perform communication interaction between the communication apparatus 1300 and another communication device, for example, exchange control signaling and/or service data. For example, the communication interface 1302 may be configured to receive a signal from an apparatus other than the communication apparatus 1300, and transmit the signal to the processor 1301, or send a signal from the processor 1301 to a communication apparatus other than the communication apparatus 1300.

Optionally, the communication interface 1302 may be a code and/or data read/write interface circuit, or the communication interface 1302 may be a signal transmission interface circuit between a communication processor and a transceiver machine, or may be a pin of a chip.

Optionally, the communication apparatus 1300 may further include at least one memory 1303, and the memory 1303 may be configured to store the related program instructions and/or data that are/is needed. It should be noted that the memory 1303 may be independent of the processor 1301, or may be integrated with the processor 1301. The memory 1303 may be located inside the communication apparatus 1300, or may be located outside the communication apparatus 1300. This is not limited.

Optionally, the communication apparatus 1300 may further include a power supply circuit 1304, and the power supply circuit 1304 may be configured to supply power to the processor 1301. The power supply circuit 1304 may be located in a same chip as the processor 1301, or may be located in a chip other than a chip in which the processor 1301 is located.

Optionally, the communication apparatus 1300 may further include a bus, and parts of the communication apparatus 1300 may be interconnected through the bus.

In some embodiments, in hardware implementation, a person skilled in the art may figure out that the communication apparatus 1100 shown in FIG. 11 may be in a form of the communication apparatus 1300 shown in FIG. 13.

In an example, a function/an implementation process of the processing unit 1110 in FIG. 11 may be implemented by the processor 1301 in the communication apparatus 1300 shown in FIG. 13 by invoking computer-executable instructions stored in the memory 1303. A function/an implementation process of the communication unit 1120 in FIG. 11 may be implemented by the communication interface 1302 in the communication apparatus 1300 shown in FIG. 13.

It should be noted that the structure shown in FIG. 13 does not constitute a specific limitation on the terminal device, the network device, or the core network device. For example, in some other embodiments of this application, the terminal device, the network device, or the core network device may include more or fewer components than those shown in the figure, or combine some components, or split some components, or have different component arrangements. The components shown in the figure may be implemented by hardware, software, or a combination of software and hardware.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or a terminal as discrete components.

It may be understood that the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or a terminal as discrete components.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of the claims and their equivalent technologies in this application.

## Claims

1. A data transmission method, comprising:
sending a paging message to a terminal device, wherein the paging message is used to page the terminal device; and
sending scheduling information to the terminal device, wherein the scheduling information is used to schedule a resource for transmission of first data, the resource is determined based on a data size indicated by first information, and the first information is from a core network device.

2. The method according to claim 1, wherein the scheduling information is sent when a first buffer status report related to the first data is not received.

3. The method according to claim 1 or 2, wherein the first information comprises a data size of the first data.

4. The method according to claim 1 or 2, wherein the first information is second data sent to the terminal device, and there is a correspondence between the second data and a data size of the first data.

5. The method according to claim 1 or 2, wherein the first information indicates a service corresponding to the first data, and there is a correspondence between the service corresponding to the first data and a data size of the first data.

6. The method according to any one of claims 1 to 5, wherein the method further comprises:
sending first signaling to the terminal device, wherein the first signaling indicates the terminal device to report the first data, wherein
the first signaling is used to trigger an inventory procedure, and the first data is service data of an inventory service; or
the first signaling is used to trigger a read procedure, and the first data is data stored by the terminal device.

7. The method according to claim 6, wherein the first signaling is located in the paging message, a random access response message, or a first message, wherein
the first message is a message after the terminal device completes random access.

8. The method according to any one of claims 1 to 7, wherein the method further comprises:
sending second information to the terminal device, wherein the second information indicates not to send or send the first buffer status report related to the first data, and the second information is located in the paging message or the random access response message.

9. The method according to any one of claims 1 to 8, wherein the terminal device is a tag in an ambient internet of things.

10. The method according to any one of claims 1 to 9, wherein the method further comprises:
sending third information to the terminal device, wherein the third information indicates the terminal device to report a second buffer status report before data transmission, and the third information is sent after the terminal device completes the random access.

11. The method according to claim 6 or 7, wherein the method further comprises:
receiving a second message from the terminal device by using the resource, wherein the second message comprises the first data, wherein the data size indicated by the first information is equal to the data size of the first data, or the data size indicated by the first information is equal to a data size of the second message.

12. The method according to claim 6 or 7, wherein the method further comprises:
receiving a second message from the terminal device by using the resource, wherein the second message comprises the first data, and the second message further comprises at least one of an access stratum message header and access stratum signaling, wherein the data size indicated by the first information is equal to a sum of the data size of the first data and at least one of a data size of the access stratum message header and a data size of the access stratum signaling.

13. A data transmission method, comprising:
receiving a paging message from a network device, wherein the paging message is used to page a terminal device; and
receiving scheduling information from the network device, wherein the scheduling information is used to schedule a resource for transmission of first data, the resource is determined based on a data size indicated by first information, and the first information is from a core network device.

14. The method according to claim 13, wherein the first information comprises a data size of the first data.

15. The method according to claim 13, wherein the first information is second data sent to the terminal device, and there is a correspondence between the second data and a data size of the first data.

16. The method according to any one of claims 13 to 15, wherein the method further comprises:
receiving first signaling from the network device, wherein the first signaling indicates to report the first data, wherein
the first signaling is used to trigger an inventory procedure, and the first data is service data of an inventory service; or
the first signaling is used to trigger a read procedure, and the first data is data stored by the terminal device.

17. The method according to claim 16, wherein the first signaling is located in the paging message, a random access response message, or a first message, wherein
the first message is a message after the terminal device completes random access.

18. The method according to any one of claims 13 to 17, wherein the terminal device is a tag in an ambient internet of things.

19. The method according to claim 16, wherein the method further comprises:
sending a second message to the network device by using the resource, wherein the second message comprises the first data, wherein the data size indicated by the first information is equal to the data size of the first data, or the data size indicated by the first information is equal to a data size of the second message.

20. The method according to claim 16, wherein the method further comprises:
sending a second message to the network device by using the resource, wherein the second message comprises the first data, and the second message further comprises at least one of an access stratum message header and access stratum signaling, wherein the data size indicated by the first information is equal to a sum of the data size of the first data and at least one of a data size of the access stratum message header and a data size of the access stratum signaling.

21. A data transmission method, wherein the method is applicable to a core network device, and comprises:
determining first information, wherein the first information indicates a data size of first data; and
sending the first information to a network device.

22. A data transmission method, comprising:
sending configuration information to a first apparatus, wherein the configuration information indicates a first resource or a first transport block size, the first resource is determined based on a first data size indicated by first information, the first transport block size indicates a size of data to be sent by the first apparatus, and the first information is from a core network device.

23. The method according to claim 22, wherein the configuration information is sent when a first buffer status report from the first apparatus is not received.

24. The method according to claim 22 or 23, wherein the first information comprises the first data size.

25. The method according to claim 22 or 23, wherein the first information is second data sent to the first apparatus, and there is a correspondence between the second data and the first data size.

26. The method according to claim 22 or 23, wherein the first information indicates a first service, and there is a correspondence between the first service and the first data size.

27. The method according to any one of claims 22 to 26, wherein the method further comprises:
sending first signaling to the first apparatus, wherein the first signaling indicates the first apparatus to report first data.

28. The method according to claim 27, wherein the first signaling is a paging message, a random access response message, a contention resolution success message, or a first message, wherein
the first message is a message after the first apparatus completes random access.

29. The method according to claim 27 or 28, wherein the method further comprises:
receiving a second message from the first apparatus by using the first resource, wherein the second message comprises the first data, wherein the first data size is equal to a data size of the first data, or the first data size is equal to a data size of the second message.

30. The method according to claim 27 or 28, wherein the method further comprises:
receiving a second message from the first apparatus by using the first resource, wherein the second message comprises the first data, and the second message further comprises at least one of an access stratum message header, access stratum signaling, and padding, wherein the first data size is less than or equal to a sum of a data size of the first data and at least one of a data size of the access stratum message header, a data size of the access stratum signaling, and a data size of the padding.

31. The method according to any one of claims 22 to 30, wherein the method further comprises:
sending second information to the first apparatus, wherein the second information indicates not to send or send the first buffer status report, and the second information is located in the paging message or the random access response message.

32. A data transmission method, comprising:
receiving configuration information from a second apparatus, wherein the configuration information indicates a first resource or a first transport block size, the first resource is determined based on a first data size indicated by first information, the first transport block size indicates a size of data to be sent by the first apparatus, and the first information is from a core network device.

33. The method according to claim 32, wherein the first information comprises the first data size.

34. The method according to claim 32, wherein the first information is second data sent to the first apparatus, and there is a correspondence between the second data and the first data size.

35. The method according to any one of claims 32 to 34, wherein the method further comprises:
receiving first signaling from the second apparatus, wherein the first signaling indicates to report first data.

36. The method according to claim 35, wherein the first signaling is a paging message, a random access response message, a contention resolution success message, or a first message, wherein
the first message is a message after the first apparatus completes random access.

37. The method according to claim 35 or 36, wherein the method further comprises:
sending a second message to the second apparatus by using the first resource, wherein the second message comprises the first data, wherein the first data size is equal to a data size of the first data, or the first data size is equal to a data size of the second message.

38. The method according to claim 35 or 36, wherein the method further comprises:
sending a second message to the second apparatus by using the first resource, wherein the second message comprises the first data, and the second message further comprises at least one of an access stratum message header, access stratum signaling, and padding, wherein the first data size is less than or equal to a sum of a data size of the first data and at least one of a data size of the access stratum message header, a data size of the access stratum signaling, and a data size of the padding.

39. The method according to claim 37 or 38, wherein the data size of the second message is determined based on the first transport block size.

40. A data transmission method, wherein the method is applicable to a core network device, and comprises:
determining first information, wherein the first information indicates a first data size; and
sending the first information to a second apparatus.

41. A communication apparatus, comprising:
a processing unit, configured to send a paging message to a terminal device via a communication unit, wherein the paging message is used to page the terminal device; wherein
the processing unit is configured to send scheduling information to the terminal device via the communication unit, wherein the scheduling information is used to schedule a resource for transmission of first data, the resource is determined based on a data size indicated by first information, and the first information is from a core network device.

42. A communication apparatus, comprising:
a processing unit, configured to receive a paging message from a network device via a communication unit, wherein the paging message is used to page the terminal device; wherein
the processing unit is configured to receive scheduling information from the network device via the communication unit, wherein the scheduling information is used to schedule a resource for transmission of first data, the resource is determined based on a data size indicated by first information, and the first information is from a core network device.

43. A communication apparatus, comprising:
a processing unit, configured to determine first information, wherein the first information indicates a data size of first data; and
a communication unit, configured to send the first information to a network device.

44. A communication apparatus, comprising:
a processing unit, configured to send configuration information to a first apparatus via a communication unit, wherein the configuration information indicates a first resource or a first transport block size, the first resource is determined based on a first data size indicated by first information, the first transport block size indicates a size of data to be sent by the first apparatus, and the first information is from a core network device.

45. A communication apparatus, comprising:
a processing unit, configured to receive configuration information from a second apparatus via a communication unit, wherein the configuration information indicates a first resource or a first transport block size, the first resource is determined based on a first data size indicated by first information, the first transport block size indicates a size of data to be sent by the first apparatus, and the first information is from a core network device.

46. A communication apparatus, comprising:
a processing unit, configured to determine first information, wherein the first information indicates a first data size; and
a communication unit, configured to send the first information to a second apparatus.

47. A communication apparatus, comprising a unit or a module configured to perform the method according to any one of claims 1 to 40.

48. A communication apparatus, comprising a processor, wherein the processor is coupled to a memory, and the memory stores a computer program; and the processor is configured to invoke the computer program in the memory, to cause the method according to any one of claims 1 to 40 to be performed.

49. A computer-readable storage medium, wherein the storage medium stores a computer program or instructions, and when the computer program or the instructions are executed by a computer, the method according to any one of claims 1 to 40 is performed.

50. A chip, wherein the chip comprises a processor, and when the processor executes a computer program or instructions, the method according to any one of claims 1 to 40 is performed.

51. A computer program product, wherein when a computer reads and executes the computer program product, the method according to any one of claims 1 to 40 is performed.
